# EUROPÄISCHE PATENTSCHRIFT

(11) **EP 0 968 452 B1**
(45) Veröffentlichungstag und Bekanntmachung des Hinweises auf die Patenterteilung: **17.07.2002**
(21) Anmeldenummer: 98917009.7
(22) Anmeldetag: 19.03.1998
(51) Int. Cl.: G02B 26/02

(54) **OPTISCHES SCHALTELEMENT UND SCHALTANORDNUNG**
OPTICAL SWITCHING ELEMENT AND SWITCHING ARRANGEMENT
ELEMENT DE COMMUTATION OPTIQUE ET AGENCEMENT DE COMMUTATION

(30) Priorität: 20.03.1997 DE 19711564
(43) Veröffentlichungstag der Anmeldung: 05.01.2000
(73) Patentinhaber: INSTITUT FÜR MIKROTECHNIK MAINZ GmbH, 55129 Mainz-Hechtsheim (DE)
(72) Erfinder: PICARD, Antoni, D-55270 Essenheim (DE); SCHMIDT, Martin, D-14192 Berlin (DE); KÄMPER, Klaus-Peter, D-55278 Mommenheim (DE); SCHULZE, Jens, D-55116 Mainz (DE); NEUMEIER, Michel, D-55270 Schwabenheim (DE)
(74) Vertreter: Fuchs Mehler Weiss & Fritzsche
(86) Internationale Anmeldenummer: EP9801600
(87) Internationale Veröffentlichungsnummer: WO9843124

(56) Entgegenhaltungen:
- US-A- 4 582 391
- US-A- 4 714 326
- US-A- 5 434 756
- MAKIHARA M ET AL: "SELF-HOLDING OPTICAL WAVEGUIDE SWITCH CONTROLLED BY MICROMECHANISMS" PROCEEDINGS OF THE ELECTRONIC COMPONENTS AND TECHNOLOGY CONFERENCE, LAS VEGAS, MAY 21 - 24, 1995, Nr. CONF. 45, 21.Mai 1995, INSTITUTE OF ELECTRICAL AND ELECTRONICS ENGINEERS, Seiten 418-422, XP000624977

## Beschreibung

Die Erfindung betrifft ein optisches Schaltelement. Die Erfindung betrifft weiterhin eine Schaltanordnung. Eine ähnliche Schaltanordnung ist aus der IEEE Transactions on Components, Packaging, and Manufacturing Techology - Part B, Vol. 18, No. 2, May 1995, Seiten 241 - 244 bekannt.

Zum Verbinden von Glasfaserleitungen sind Matrixschalter bekannt, mit denen N-optische Eingangskanäle beliebig auf M-optische Ausgangskanäle geschaltet werden können. Die Anzahl der zu verschaltenden Glasfasern ist vom jeweiligen Anwendungsbereich abhängig. Im Bereich der Telekommunikation finden Matrixschalter mit einer Vielzahl von Ein- und Ausgangskan älen Verwendung.

Es sind mechanische Matrixschalter bekannt, bei denen Spiegel oder Prismen mit hoher Präzision bewegt werden. Auf Spiegel- oder Prismenanordnungen beruhende Schalter benötigen einen sehr stabilen und präzisen Aufbau. Die geforderte Präzision ist im allgemeinen mit einem hohen technischen Aufwand verbunden.

Neben den optischen Schaltelementen, bei denen die mikrooptischen Komponenten mit hoher Präzision bewegt werden, sind auch optische Schaltelemente bekannt, die nach einem Schaltprinzip arbeiten, das eine Bewegung von mikrooptischen Komponenten nicht erforderlich macht.

Die GB 1 494 150 beschreibt ein optisches Schaltelement in einem Lichtwellenleiter, bei dem eine Grenzfläche, auf die das einfallende Licht trifft, zwischen einem Zustand der Totalreflexion und der Transmission umgeschaltet wird. Der bekannte optische Schalter weist in dem Kern des Lichtwellenleiters einen schmalen Spalt auf. Der Spalt bildet eine ebene Grenzfläche zwischen einem optisch dichteren Medium, d.h. dem Material des Kerns des Lichtwellenleiters, und einem optisch dünneren Medium, d.h. einem gasförmigen Stoff in dem Spalt, so daß schräg auf die Grenzfläche fallendes, entlang des Lichtwellenleiters geführtes Licht an der Grenzfläche in Richtung eines angrenzenden Lichtwellenleiters totalreflektiert wird. Zum Umschalten in den transmittierenden Zustand, in dem das auf die Grenzfläche treffende Licht seine Ausbreitungsrichtung beibehält, wird in den Spalt eine Flüssigkeit geleitet, deren Brechungsindex dem Brechungsindex des Materials entspricht, aus dem der Kern des Lichtwellenleiters besteht. Als Vorrichtung zum wahlweisen Einleiten des Stoffs in seiner flüssigen oder gasförmigen Phase ist ein mit einer Heizeinrichtung an den Lichtwellenleiter angebrachtes Vorratsgefäß vorgesehen. Durch thermische Ausdehnung wird die Flüssigkeit in den durch die Mantelschicht in die Kernschicht des Lichtwellenleiters hineinragenden Schlitz gedrückt. In einer anderen Ausführungsform wird der im Schlitz befindliche flüssige Stoff durch Erhitzen in die Gasphase gebracht.

Nachteilig ist die aufwendige Herstellung des bekannten Schalters, da in ein Lichtwellenleiter zunächst ein Schlitz einzubringen ist, daran eine Vorrichtung zum Befüllen anzubringen ist und dieser Aufbau nach Außen abgedichtet werden muß. Durch das Schlitzen des Lichtwellenleiters lassen sich nur parallele Flächen realisieren, die darüberhinaus als reflektierende Flächen keine hohe optische Qualität aufweisen. Weiterhin besitzt der bekannte Schalter eine hohe optische Dämpfung, da der aus dem Lichtwellenleiter divergierend heraustretende Lichtstrahl im Bereich des Schlitzes nicht geführt ist. Daher kann im transmittierenden Schaltzustand ein Teil in den angrenzenden Lichtwellenleiter überkoppeln, was zu einem hohen Nebensprechen des bekannten Schalters führt.

Der Erfindung liegt die Aufgabe zugrunde, ein optisches Schaltelement mit einer niedrigen optischen Dämpfung und geringem Nebensprechen zu schaffen, das einen kompakten Aufbau und eine hohe Lebensdauer hat und sich dabei kostengünstig herstellen läßt. Darüber hinaus liegt der Erfindung die Aufgabe zugrunde, eine Schaltanordnung mit N-optischen Eingängen und M-optischen Ausgängen mit den oben genannten Eigenschaften zur Verfügung zu stellen.

Schaltanordnungen mit in Matrixform angeordneten Schaltelementen sind aus einem Artikel von M. Makihara et al. in Proceedings of the Electronic Components and Technology Conference, May 1995, Seiten 418-422, bekannt. Die dort beschriebenen Schaltelemente bestehen aus einem lichtdurchlässigen Basiskörper mit Ausnehmungen, die teilweise mit einer Flüssigkeit gefüllt sind. Durch Eintauchen eines bewegbaren Körpers in diese Ausnehmungen wird ein damit verbundener Spalt mit der Flüssigkeit gefüllt und somit dessen Reflexionsverhalten gesteuert.

Die Lösung der Aufgaben erfolgt erfindungsgemäß mit den im Patentanspruch 1 bzw. 30 angegebenen Merkmalen.

Die Ausnehmung enthält eine Flüssigkeit und einen in der Ausnehmung bewegbaren Körper, wobei die Flüssigkeit derart beschaffen und der bewegbare Körper derart ausgebildet und in der Ausnehmung zwischen einer Position, in der das optische Schaltelement in dem transmittierenden Schaltzustand ist, und einer Position, in der das optische Schaltelement in dem reflektierenden Schaltzustand ist, bewegbar ist, daß im transmittierenden Schaltzustand der im Strahlengang des einfallenden Lichts liegende Bereich des Spaltes zwischen der Grenzfläche und der Oberfläche des bewegbaren Körpers vollständig mit der Flüssigkeit gefüllt ist, und daß im reflektierenden Schaltzustand zumindest der im Strahlengang des einfallenden Lichts liegende Bereich der Grenzfläche frei von der Flüssigkeit ist, so daß das einfallende Licht an der Grenzfläche im wesentlichen reflektiert wird und daß mindestens eine Betätigungseinrichtung zum Umschalten des bewegbaren Körpers zwischen dem transmittierenden und dem reflektierenden Schaltzustand vorgesehen ist.

Bei dem optischen Schaltelement gemäß der Erfindung ist die Ausnehmung in dem transparenten Basiskörper nur teilweise mit der Flüssigkeit gefüllt, die an den Brechungsindex des Basiskörpers weitgehend angepaßt ist. Zur Umschaltung zwischen dem transmittierenden und reflektierenden Schaltzustand ist ein in der Ausnehmung bewegbarer Körper vorgesehen. Der bewegbare Körper ist derart ausgebildet und in der Ausnehmung zwischen zwei Positionen bewegbar, daß in dem transmittierenden Schaltzustand zumindest der im Strahlengang des einfallenden Lichts liegende Bereich des Spalts zwischen der Grenzfläche und der Oberfläche des bewegbaren Körpers vollständig mit der Flüssigkeit gefüllt ist. Dadurch wird erreicht, daß das einfallende Licht an der Grenzfläche nicht totalreflektiert wird, sondern durch die Grenzfläche hindurchtritt. In dem reflektierenden Schaltzustand befindet sich der Körper in einer Position, in der die Grenzfläche frei von Flüssigkeit ist, so daß das einfallende Licht an der Grenzfläche zwischen dem optisch dichteren Medium, d. h. dem Material des Basiskörpers, und dem optisch dünneren Medium, d. h. einem in der Kavität befindlichen Gas, totalreflektiert wird.

Der entscheidende Vorteil des Schaltelements ist, daß die für den Schaltvorgang verantwortliche Grenzfläche nicht bewegt wird. Durch die vorzugsweise Verwendung von kollimierten Lichtstrahlen sind keine aufwendig zu realisierende Wellenleiterstrukturen zur Strahlführung im Grundkörper erforderlich. Da der Strahl auch in den am Schaltvorgang beteiligten Ausnehmungen nicht divergiert, weist der erfindungsgemä ße optische Mehrfachschalter eine geringe optische Dämpfung und geringes Nebensprechen auf.

Die Verwendung der Begriffe optischer Eingang sowie optischer Ausgang im Gegensatz zu dem Begriff optischer Kanal dient nur einer Vereinfachung der Beschreibung des optischen Schaltelements und seinen Schaltanordnungen. Auf Grund der Umkehrbarkeit der Lichtwege ist eine Verwendung in beiden Strahlrichtungen, also bidirektional, möglich.

Vorzugsweise wird das erfindungsgemäße optische Schaltelement mit Freistrahlen, d. h. mit nicht in Wellenleiterstrukturen geführten Lichtstrahlen, betrieben. Dies kann beispielsweise dadurch erreicht werden, daß das mittels Lichtwellenleitern herangeführtes Licht vor dem Eintritt in den eigentlichen Schalter kollimiert wird. Grundsätzlich ist es aber auch denkbar, in das optische Schaltelement integriert optische Strukturen zur Führung von Licht beispielsweise mittels Schicht- oder Grabenwellenleiterstrukturen aufzunehmen, wodurch aber ein komplexerer Aufbau des Basiskörpers erforderlich wird.

Wenn das Schaltelement in den reflektierenden Zustand geschaltet wird, muß sich die Flüssigkeit in möglichst kurzer Zeit vollständig von der Grenzfläche zurückziehen. Dieser Effekt kann dadurch unterstützt werden, daß die an dem Schaltzustand beteiligten Oberflächen der Grenzfläche einer zusätzlichen beispielsweise chemischen- bzw. plasma-chemischen Behandlung unterzogen werden oder mit einem oder mehreren geeigneten Materialien beschichtet werden. In diesem Zusammenhang ist auch eine Feinstrukturierung der relevanten Oberflächen von Vorteil.

Der Basiskörper und der in der Ausnehmung bewegbare Körper bestehen zumindest in Teilen aus in dem verwendeten Wellenlängenbereich transparenten Materialien. Bestehen beide Körper aus dem gleichen Material, so hat dies den Vorteil, daß die Körper den gleichen Brechungsindex haben. Die Flüssigkeit sollte ebenfalls einen ähnlichen Brechungsindex aufweisen.

Der Basiskörper und der bewegbare Körper können aus transparenten Materialien, wie (fluorierte) Polymere mit geringer optischer Absorption in dem gewünschten Spektralbereich, Gläser, mit SolGel-Verfahren hergestellte Materialien, Silberhalogeniden, bestehen. Für die Signalübertragung im sichtbaren Bereich kann konventionelles PMMA Verwendung finden. Im infraroten Spektralbereich sind modifizierte Polymere von Vorteil.

Als Flüssigkeit können auch Mischsysteme unterschiedlicher Substanzen eingesetzt werden. Eine Anpassung des Brechungsindex beispielsweise für PMMA kann im sichtbaren Bereich durch ein Gemisch aus Dekalin und Tetralin erreicht werden.

Als optisch dünneres Medium kann ein Gas oder ein Gasgemisch eingesetzt werden. Hierzu eignet sich ein inertes Gas wie Argon. Vorteilhafterweise weist das Gas schlechte Diffusionseigenschaften auf. Aber auch Luft eignet sich als optisch dünneres Medium.

Von besonderem Vorteil ist, daß die Betätigungseinrichtung zum Umschalten des bewegbaren Körpers zwischen dem transmittierenden und reflektierenden Schaltzustand außerhalb des Strahlengangs angeordnet werden kann. Da der eigentliche Schaltvorgang durch die Flüssigkeit erfolgt, ist eine exakte Führung des bewegbaren Körpers nicht erforderlich, so daß sich die Betätigungseinrichtung ohne großen technischen Aufwand kostengünstig realisieren läßt.

Prinzipiell ist eine direkte mechanische Kopplung zwischen der beispielsweise piezoelektrischen oder thermoelektrischen Betätigungseinrichtung und dem bewegbaren Körper möglich. Vorzugsweise erfolgt die Betätigung des beweglichen Körpers aber berührungslos, so daß die Ausnehmung hermetisch abgekapselt werden kann, wodurch das Schaltelement gegenüber äußeren Einflüssen weitgehend unempfindlich ist.

In einer bevorzugten Ausführungsform weist die Betätigungseinrichtung einen außerhalb der Ausnehmung angeordneten Elektromagneten auf, wobei der bewegbare Körper magnetisch ist. Vorzugsweise ist der aus dem gleichen (nichtmagnetischen) Material wie der Basiskörper bestehende bewegbare Körper an seiner Oberfläche mit einer Schicht oder einem Körper aus einem magnetischen oder einem magnetisierbaren Material versehen. Von der Stromversorgung unabhängige stabile Schaltzustände können mit Permanentmagneten erreicht werden. Anstelle einer elektromagnetischen Betätigungseinrichtung kann auch eine elektrostatische Betätigungseinrichtung vorgesehen sein. In einer weiteren Ausführungsform sind zwei Betätigungseinrichtungen, die auf zwei sich gegenüberliegenden Seiten außerhalb der Ausnehmung angeordnet sind, vorgesehen.

Die Verteilung der Flüssigkeit in der Ausnehmung kann dadurch erfolgen, daß die Flüssigkeit mit dem bewegbaren Körper verdrängt und in den Spalt gedrückt wird. Hierzu ist die Ausnehmung soweit mit der Flüssigkeit gefüllt, daß im reflektierenden Schaltzustand der im Strahlengang des einfallenden Lichts liegende Bereich der Grenzfläche außerhalb des Flüssigkeitsspiegels liegt. Im transmittierenden Schaltzustand ist der bewegbare Körper derart in die Flüssigkeit bewegt, daß der im Strahlengang des einfallenden Lichts liegende Bereich des Spaltes durch Verdrängung mit Flüssigkeit gefüllt ist. Die Flüssigkeit kann dabei am Boden der Ausnehmung beispielsweise mit einem schwammartigen Material gebunden werden, so daß das Schaltelement lageunabhängig arbeitet.

Bei einer alternativen Ausführungsform ist aufgrund von kapillaren Kräften ein Flüssigkeitsfilm zwischen dem bewegbaren Körper und der Wandung der Ausnehmung ausgebildet, der mit dem Körper während des Schaltvorgangs mitgeführt wird. Damit ist im transmittierenden Schaltzustand zumindest der im Strahlengang des einfallenden Lichts liegende Bereich des Spaltes zwischen der Grenzfläche und der Oberfläche des bewegbaren Körpers mit dem Flüssigkeitsfilm gefüllt. Im reflektierenden Schaltzustand ist dagegen der im Strahlengang des einfallenden Lichts liegende Bereich der Grenzfläche frei von dem Flüssigkeitsfilm. Beide Prinzipien, das Prinzip der Verdrängung und das Prinzip des Flüssigkeitsfilms, können auch vereint werden.

Die Ausnehmung kann grundsätzlich beliebig ausgebildet sein. Wesentlich ist die Ausrichtung der Grenzfläche zu der Ausbreitungsrichtung des einfallenden Lichts. Der Winkel zwischen der Ausbreitungsrichtung des einfallenden Lichts und der Grenzfläche ist nicht zwingend in dem Bereich 40° bis 50°. So ist es denkbar, den Einfallswinkel so zu bemessen, daß keine Totalreflexion auftritt. Bei einer solchen Anordnung könnte das Schaltelement auch als Strahlteiler eingesetzt werden. Bevorzugt ist er aber so bemessen, daß eine Totalreflexion auftritt.

Damit beispielsweise die Luft innerhalb der Ausnehmung den Schaltmechanismus nicht behindert, können am Rand der Ausnehmung Entlüftungsschlitze vorgesehen sein. Durch diese Kanäle kann das optisch dünnere Medium dann während des Schaltvorgangs ungehindert strömen. In einer anderen Ausführungsform kann der bewegbare Körper eine entsprechend geeignete Form besitzen.

Mindestens eine Seitenfläche der Ausnehmung bildet eine Lichtaustrittsfläche für das transmittierte Licht. Es ist nicht erforderlich, daß die nicht an der Reflexion beteiligten Seitenflächen die gleiche Oberflächenqualität wie die die Grenzfläche bildenden Seitenflächen aufweisen, sofern diese nicht an der Reflexion beteiligten Seitenflächen im transmittierenden Schaltzustand mit der Flüssigkeit benetzt sind.

In einer Ausführungsform weist die Ausnehmung in der Ebene des Strahlengangs eines Lichtstrahls einen dreieckförmigen Querschnitt auf. In einer anderen Ausführungsform besitzt die Ausnehmung einen viereckförmigen Querschnitt. Vorteilhafterweise weist der bewegbare Körper im wesentlichen die gleiche Querschnittsgeometrie wie die Ausnehmung auf.

Es ist auch denkbar, daß zumindest eine der Flächen der Ausnehmung, die als Grenzfläche im reflektierenden Schaltzustand einfallende Lichtstrahlen reflektiert, so geformt und angeordnet ist, daß sie zumindest ein Teil der auf diese Fläche einfallenden Lichtstrahlen bei der Reflexion bündelt.

Der Basiskörper kann vorteilhafterweise weitere Ausnehmungen aufweisen, die zur Aufnahme und Halterung von Lichtwellenleitern beispielsweise Glasoder Kunststoffasern oder deren Faserbändchen sowie Fasersteckern dienen. Dies können beispielsweise kanalartige Strukturen sein, die jeweils zu einer Außenseite des Basiskörpers hin offen sind, so daß Lichtwellenleiter einfach in definierter Lage in den Basiskörper hineingeschoben werden können. Zur Fixierung der Lichtwellenleiter können zusätzliche klemmartige oder federartige Strukturen vorgesehen sein.

Weiterhin können im Basiskörper auch ein oder mehrere Ausnehmungen zur Aufnahme optischer Elemente vorgesehen sein, die zur Führung des Lichts wegen der relativ hohen Divergenz der aus den Eingangslichtwellenleitern austretenden Lichtstrahlen im allgemeinen erforderlich sind. Zu Kollimierung und/ oder Fokussierung des Lichts können als optische Elemente beispielsweise Kugellinsen, Mikrolinsen, GRIN-Linsen, Zylinderlinsen etc. in dem Basiskörper integriert sein. Denkbar ist auch die Aufnahme von beispielsweise zeilenförmigen Mikrolinsenfeldern zur Bündelung von Lichtstrahlen mehrerer optischer Kanäle. Es ist aber auch möglich, das Licht mit integriert optischen Wellenleitern, z. B. Grabenwellenleiter oder Schichtwellenleiter, innerhalb des Basiskörpers effizient zu führen.

Es können aber auch eine oder mehrere zusätzliche Ausnehmungen im Strahlengang angeordnet sein, die so geformt sind, daß sie einfallendes Licht bündeln. Entscheidend ist hierbei neben der Form der Ausnehmung auch der Brechungsindex des in der Ausnehmung enthaltenen Stoffs oder Stoffgemischs.

Gemäß der Erfindung wird im reflektierenden Schaltzustand ein einfallender Lichtstrahl an einer Grenzfläche, die durch eine Fläche der Ausnehmung gebildet wird, reflektiert. Der reflektierte Strahl trifft auf einen Ausgang während im transmittierenden Schaltzustand der Strahl durch die Ausnehmung hindurch auf einen anderen Ausgang fällt. Es ist aber auch denkbar, mehrere einfallende Lichtstrahlen auf die gleiche von einer Fläche der Ausnehmung gebildeten Grenzfläche fallen zu lassen. Hierdurch sind entsprechend mehr Ausgänge vorzusehen.

In einer anderen Ausführungsform der Erfindung treffen mindestens zwei einfallende Lichtstrahlen auf zwei Grenzflächen, die zwei Flächen der Ausnehmung entsprechen. Vorteilhafterweise liegen die auf die beiden Grenzflächen fallenden Lichtstrahlen in einem Winkel von 70° bis 110° zueinander. Vorzugsweise fällt im transmittierenden Schaltzustand der durch die eine Grenzfläche hindurchtretende Lichtstrahl auf den gleichen Ausgang, auf den im reflektierenden Schaltzustand der andere Lichtstrahl trifft, der von der anderen Grenzfläche reflektiert wird. Die beiden die Grenzflächen bildenden Seitenflächen der Ausnehmung liegen nach einer Ausführungsvariante etwa parallel zueinander. In einer zweiten Ausführungsvariante bilden diese beiden Flächen der Ausnehmung einen Winkel von 70° bis 110° vorzugsweise von etwa 90°. Es sind jedoch auch andere Geometrien denkbar.

Bevorzugt wird bei dieser zweiten Variante ein Querschnitt der Ausnehmung und des bewegbaren Körpers, der in der Ebene des Strahlengangs eines Lichtstrahls einem gleichschenkeligen Dreieck entspricht. Solch eine Anordnung weist bei zwei einfallenden Lichtstrahlen vorzugsweise drei Ausgänge auf, wobei ein Ausgang sowohl einem transmittierten als auch einem anderen reflektierten Lichtstrahl entspricht.

Damit diese Anordnung nur zwei Ausgänge aufweist, sind zwei zusätzliche reflektierende Flächen vorzusehen, an denen der eine transmittierte Lichtstrahl so reflektiert, vorzugsweise totalreflektiert wird, daß dieser auf den Ausgang fällt, auf den im reflektierenden Schaltzustand ein anderer reflektierter Lichtstrahl trifft. Diese beiden zusätzlichen Flächen bilden vorzugsweise einen Winkel von 70° bis 110° zueinander. In einer ersten Ausführungsform werden diese beiden Flächen durch zwei Außenflächen des Basiskörpers gebildet. In einer zweiten Ausführungsform werden diese beiden Flächen durch mindestens eine zusätzliche, vorzugsweise mit einem optisch dünneren Stoff oder Stoffgemisch gefüllten Ausnehmung gebildet. In einer dritten Ausführungsform entsprechen diese beiden Flächen zwei im transmittierenden Schaltzustand nicht mit Flüssigkeit benetzten Flächen des bewegbaren Körpers. Hierbei weist der bewegbare Körper in der Ebene des Strahlengangs eines Lichtstrahls einen vorzugsweise quadratischen Querschnitt auf. Während es bei den anderen Ausführungsformen nur auf eine exakte Lage der durch eine oder mehrere Seitenflächen der Ausnehmung gebildeten Grenzfläche ankommt und die Führung des bewegbaren Körpers keiner hohen Präzision bedarf, ist es nach diesem Ausführungsbeispiel erforderlich, die Lage des bewegbaren Körpers im transmittierenden Schaltzustand möglichst genau festzulegen.

In einer weiteren Ausführungsform der Erfindung sind mehr als zwei wahlweise transmittierende oder reflektierende Grenzflächen, die von entsprechend vielen Flächen der Ausnehmung gebildet werden, vorgesehen. Die Ausnehmung und der bewegbare Körper weisen beispielsweise einen quadratischen Querschnitt auf, wodurch vier Grenzflächen möglich sind. Vorzugsweise fallen je ein reflektierter Strahl und je ein transmittierter Strahl, in unterschiedlichen Schaltzuständen, auf den gleichen Ausgang.

Bei den bisher beschriebenen Ausführungsformen können auch an der Grenzfläche oder den Grenzflächen mehr als ein Lichtstrahl wahlweise reflektiert oder transmittiert werden. Hierbei sind im wesentlichen zwei Anordnungen oder Kombinationen dieser beiden Anordnungen denkbar. Nach der ersten Anordnung liegen die einfallenden Lichtstrahlen mit ihren im reflektierenden Schaltzustand reflektierten Anteilen im wesentlichen in einer Ebene. Nach der zweiten Anordnung steht die Ebene der einfallenden Lichtstrahlen zu der Ebene ihrer reflektierten Anteile vorzugsweise in einem Winkel von 70° bis 110°.

Um bei mehreren auf eine Grenzfläche einfallenden Lichtstrahlen zu vermeiden, daß der bewegbare Körper über den gesamten Bereich der im Strahlengang liegenden Grenzfläche bewegt werden muß, kann es vorteilhaft sein, daß der bewegbare Körper parallel zu der Ebene des Strahlengangs eines Lichtstrahls zwei Bereiche unterschiedlichen Querschnittes aufweist. Die Bereiche größeren Querschnitts liegen vorteilhafterweise so nahe an mindestens einer Fläche der Ausnehmung, daß zwischen diesen Bereichen und der entsprechenden Fläche der Ausnehmung ein Flüssigkeitsfilm bestehen bleiben kann. Die zwischen den Bereichen größeren Querschnitts liegenden Bereiche kleineren Querschnitts, weisen vorzugsweise solch einen Abstand zur entsprechenden Fläche der Ausnehmung auf, daß sich dazwischen kein Flüssigkeitsfilm ausbilden kann. Um von dem transmittierenden in den reflektierenden Schaltzustand zu gelangen, braucht der bewegbare Körper nur soweit verschoben werden, daß anstatt der Bereiche mit größerem Querschnitt die nächstliegenden Bereiche kleineren Querschnitts des bewegbaren Körpers an die im Strahlengang liegenden Bereiche der Grenzfläche grenzen.

Die Schaltanordnung ist dadurch gekennzeichnet, daß die Ausnehmung die Flüssigkeit und einen bewegbaren Körper enthält, wobei die Flüssigkeit derart beschaffen und der bewegbare Körper derart ausgebildet und in der Ausnehmung zwischen einer Position, in der das optische Schaltelement in dem transmittierenden Schaltzustand ist, und einer Position, in der das optische Schaltelement in dem reflektierenden Schaltzustand ist, bewegbar ist, daß im transmittierenden Schaltzustand zumindest der im Strahlengang des einfallenden Lichts liegende Bereich eines Spaltes zwischen der Grenzfläche und der Oberfläche des bewegbaren Körpers vollständig mit der Flüssigkeit gefüllt ist, und in dem reflektierenden Schaltzustand zumindest der im Strahlengang des einfallenden Lichts liegende Bereich der Grenzfläche frei von der Flüssigkeit ist, so daß das einfallende Licht an der Grenzfläche im wesentlichen reflektiert wird, und daß die mindestens eine Betätigungseinrichtung zum Umschalten des Schaltelements zwischen dem transmittierenden und dem reflektierenden Schaltzustand durch Bewegen des bewegbaren Körpers dient.

Als Schaltelemente können sämtliche zuvor beschriebenen Ausführungsformen verwendet werden. Die Anzahl der Eingänge und Ausgänge kann gleich oder unterschiedlich sein (N = M oder N ≠ M).

In einer erweiterten Ausführungsform sind neben den N optischen Eingängen und M optischen Ausgängen weitere N optische Ausgänge vorgesehen, die auf der den N ersten optischen Eingängen gegenüberliegenden Seite der Schaltanordnung angeordnet sind. Darüber hinaus besteht auch die Möglichkeit, weitere M optische Eingänge vorzusehen, die auf der den M ersten optischen Ausgängen gegenüberliegenden Seite der Schaltanordnung angeordnet sind. Darüber hinaus besteht auch die Möglichkeit, 2xN optische Eingänge und 2xM optische Ausgänge mit NxM optischen Schaltelementen in Matrixanordnung vorzusehen.

Soll von N Eingangskanä len jeweils ein bestimmter Eingang auf nur den entsprechenden Ausgang entweder von N ersten Ausgangskan älen oder von N zweiten Ausgangskanälen geschaltet werden, so kann auch eine Schaltanordnung zweckmäßig sein, bei der N Schaltelemente in der Art einer Diagonalen einer NxN Matrix angeordnet sind.

Das Licht kann in die bzw. aus der Schaltanordnung mittels optischen Lichtwellenleitern geführt werden. Zur Ankopplung der Lichtwellenleiter der Schaltelemente sind beispielsweise in dem gemeinsamen Basiskörper N-parallele Kanäle zur Aufnahme der N-Eingangslichtwellenleiter und M-parallele Kanäle zu Aufnahme der M-Ausgangslichtwellenleiter vorgesehen, wobei die Eingangskanäle im Sinne eines einfachen geometrischen Aufbaus in einem Winkel von 70° bis 110° zu den Ausgangskanälen und die Grenzflächen der Ausnehmungen der einzelnen Schaltelemente in einem Winkel von 40° bis 50° zu den Eingangs- bzw. Ausgangskanälen angeordnet sind. Der Basiskörper besteht vorteilhafterweise aus einer Bodenplatte, einer strukturierten Platte und einer Deckplatte. Zur Kollimierung/Fokussierung des Lichts kann die Integration optischer Elemente, insbesondere von Mikrolinsen oder GRIN-Linsen, von Vorteil sein. Hierzu sind im Strahlengang zwischen den Eingangs- und Ausgangskanälen und den Ausnehmungen der Schaltelemente entsprechende Vertiefungen vorzusehen.

In einer weiteren Ausführungsform sind die einzelnen Schaltelemente als eigenständige Schaltmodule realisiert, die in eine Matrixplatte mit ensprechenden, beispielsweise nach Art einer Matrix angeordneten Ausnehmungen eingesetzt werden können. Die Matrixplatte ist vorteilhafterweise mit zur Aufnahme von Lichtwellenleitern und/ oder optischen Komponenten geeigneten weiteren Ausnehmungen versehen. Mit diesem modularen Aufbau lassen sich vorteilhaft Schaltanordnungen aus gleichen oder unterschiedlichen Schaltmodulen flexibel aufbauen und rekonfigurieren.

Zumindest Teile des Basiskörpers, des bewegbaren Körpers, der Betätigungseinrichtung und/ oder der Matrixplatte lassen sich vorteilhaft mit mikrotechnischen Verfahren, beispielsweise mittels des LIGA-Verfahrens, kostengünstig in großen Stückzahlen herstellen.

Die hier beschriebenen optischen Schaltelemente und deren Schaltanordnungen lassen sich besonders vorteilhaft im Bereich der optischen Nachrichtentechnik, insbesondere zum wahlweise Verbinden oder Entkoppeln von optischen Nachrichtenkanälen sowie zum Einkoppeln von optischen Komponenten in bestehende optische Verbindungen, verwenden. Auf Grund der möglichen rechtwinkligen Anordnung der reflektierten zu den transmittierten Lichtstrahlen, lassen sich mit den erfindungsgemäßen Schaltelementen und deren Schaltanordnungen analog zu den in der Mikroelektronik bekannten Bussystemen mit rechtwinklig angeordneten Steckkarten und Platinen kompakte optische Bussysteme realisieren.

Im Folgenden werden mehrere Ausführungsbeispiele der Erfindung unter Bezugnahme auf die Zeichnungen näher erläutert.

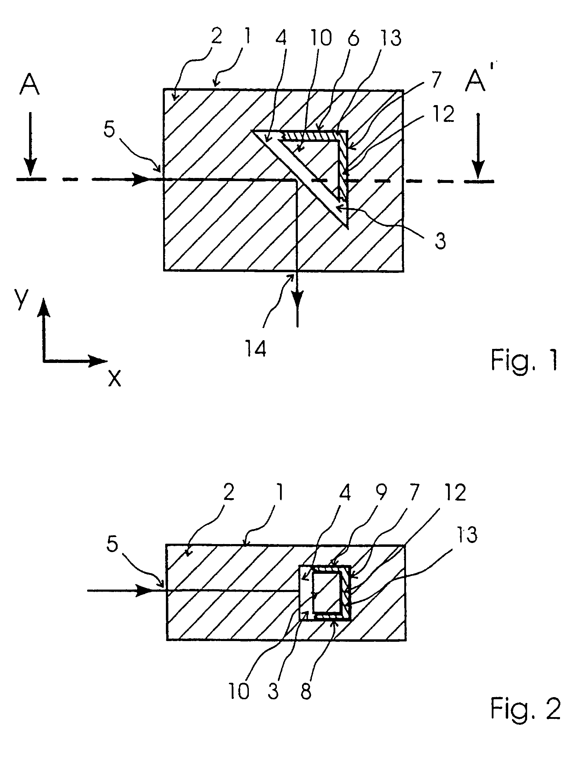

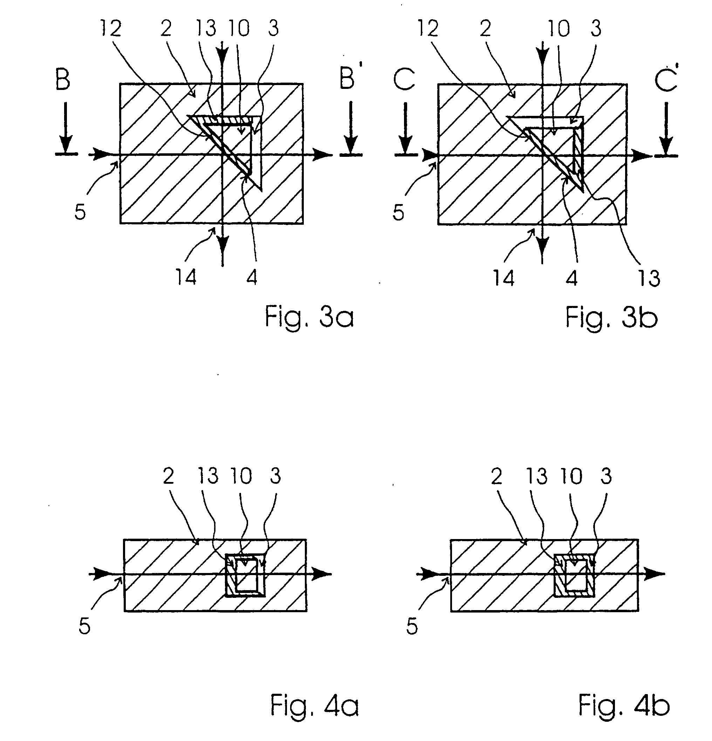

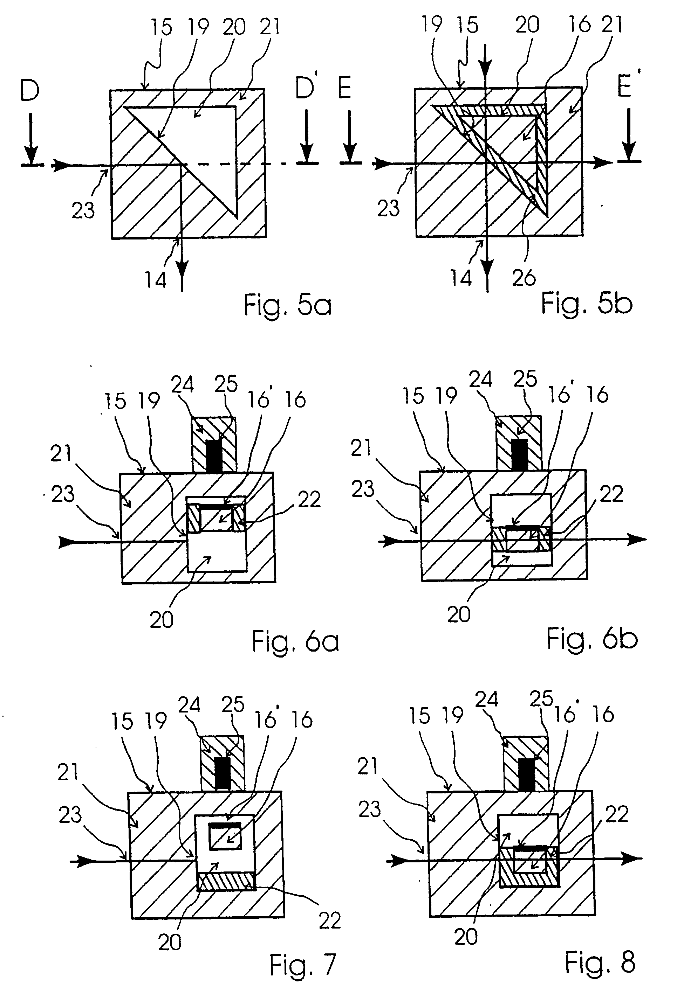

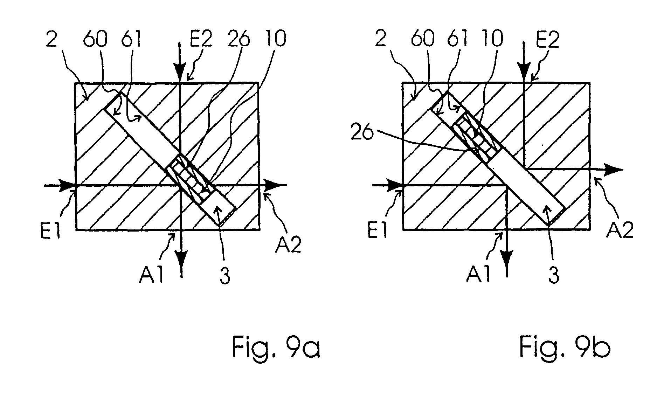

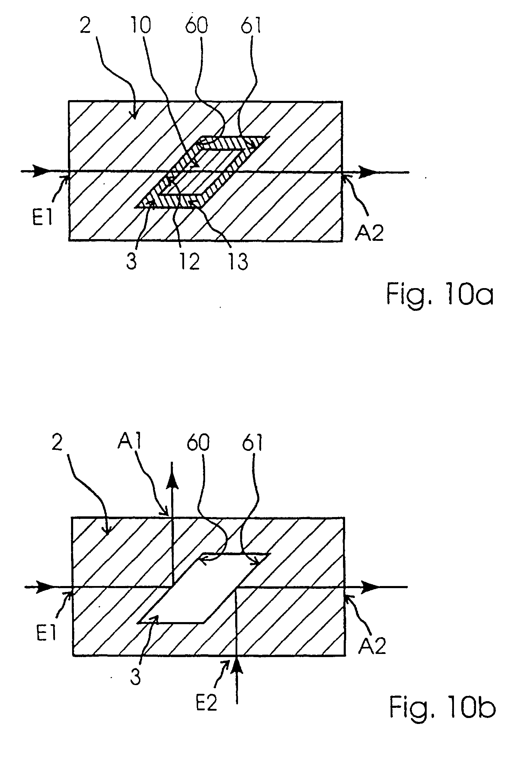

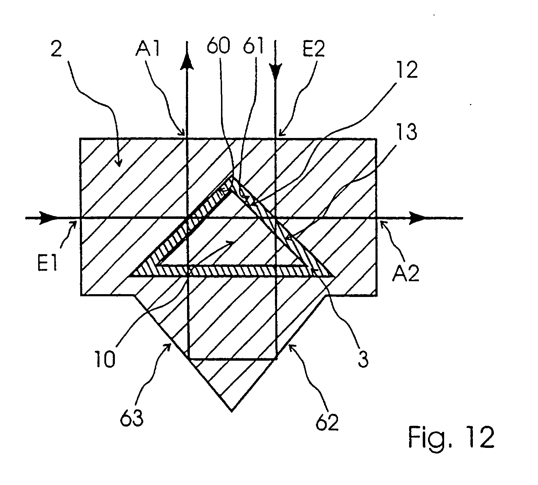

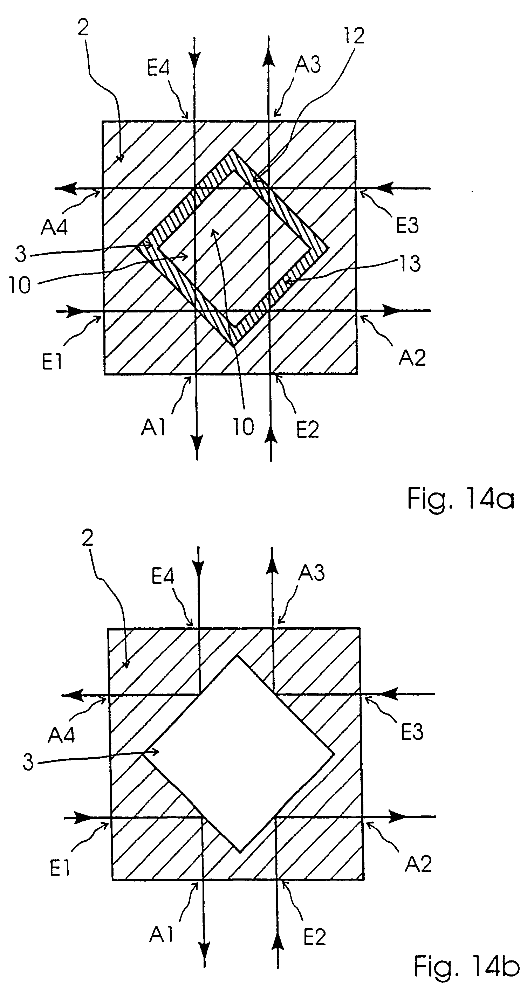

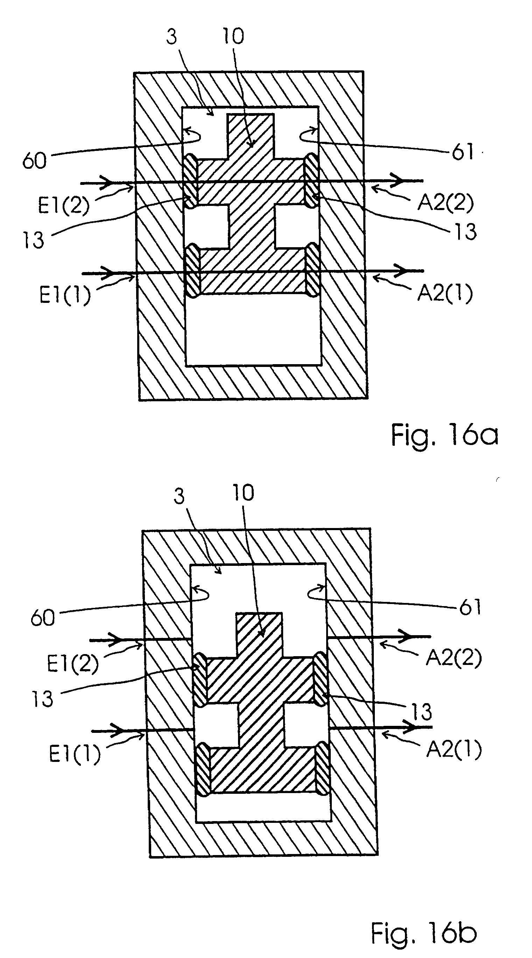

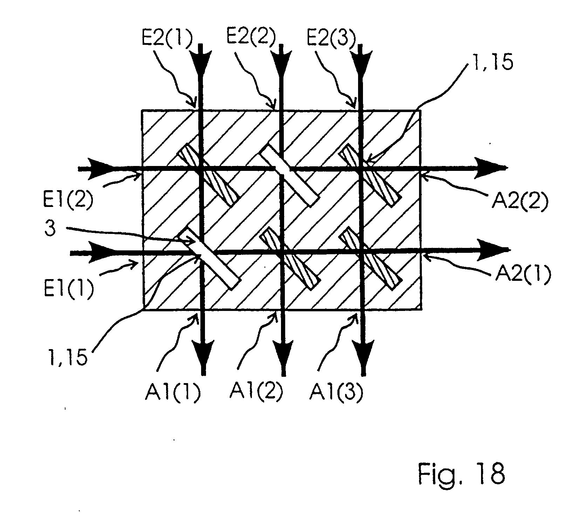

Es zeigen:
Figur 1
   eine auf dem Prinzip des Flüssigkeitsfilms beruhende Ausführungsform des Schaltelements in schematischer Darstellung, wobei das Schaltelement den Schaltzustand der Reflexion einnimmt,
Figur 2
   einen Schnitt durch das Schaltelement von Figur 1 entlang der Linie A-A',
Figur 3a
   das Schaltelement von Figur 1 im transmittierenden Schaltzustand,
Figur 3b
   das Schaltelement von Figur 1 im transmittierenden Schaltzustand, wobei der bewegbare Körper eine andere Position einnimmt als in Figur 3a,
Figur 4a
   einen Schnitt durch das Schaltelement von Figur 3a entlang der Linie B-B',
Figur 4b
   einen Schnitt durch das Schaltelement von Figur 3b entlang der Linie C-C',
Figur 5a
   eine Ausführungsform, die sowohl auf dem Prinzip des Flüssigkeitsfilms als auch auf dem Prinzip der Verdrängung beruhen kann, wobei das Schaltelement den Schaltzustand der Reflexion einnimmt,
Figur 5b
   das Schaltelement von Figur 5a im transmittierenden Schaltzustand,
Figur 6a
   einen Schnitt durch ein auf dem Prinzip des Flüssigkeitsfilms beruhendes Schaltelement im reflektierenden Schaltzustand nach Figur 5a entlang der Linie D-D',
Figur 6b
   einen Schnitt durch ein auf dem Prinzip des Flüssigkeitsfilms beruhendes Schaltelement im transmittierenden Schaltzustand nach Figur 5b entlang der Linie E-E',
Figur 7
   einen Schnitt durch ein auf dem Prinzip der Verdrängung beruhendes Schaltelement im reflektierenden Schaltzustand nach Figur 5a entlang der Linie D-D',
Figur 8
   einen Schnitt durch ein auf dem Prinzip der Verdrängung beruhendes Schaltelement im reflektierenden Schaltzustand nach Figur 5b entlang der Linie E-E',
Figur 9a
   eine auf dem Prinzip des Flüssigkeitsfilms beruhende Ausführungsform des Schaltelements, wobei das Schaltelement im transmittierenden Zustand ist und die Ausnehmung und der bewegbare Körper einen viereckigen Querschnitt aufweisen,
Figur 9b
   das Schaltelement nach Figur 9a im reflektierenden Zustand,
Figur 10a
   ein Ausführungsbeispiel des Schaltelements mit einem parallelogrammförmigen Querschnitt der Ausnehmung und des bewegbaren Körpers, wobei das Schaltelement im transmittierenden Zustand ist,
Figur 10b
   das Schaltelement nach Figur 10a im reflektierenden Zustand,
Figur 11a
   ein weiteres Ausführungsbeispiel des Schaltelements mit einem dreieckförmigen Querschnitt der Ausnehmung und des bewegbaren Körpers, wobei das Schaltelement im transmittierenden Zustand ist,
Figur 11b
   das Schaltelement nach Figur 11a im reflektierenden Zustand,
Figur 12
   ein Schaltelement nach Figur 11a mit zwei zusätzlichen reflektierenden Flächen am Basiskörper,
Figur 13
   ein Schaltelement nach dem in Figur 12 dargestellten Prinzip, wobei der bewegbare Körper zwei zusätzliche reflektierende Flächen aufweist,
Figur 14a
   ein Ausführungsbeispiel des Schaltelements als optischer Mehrfachschalter im transmittierenden Schaltzustand mit quadratischem Querschnitt der Ausnehmung und des bewegbaren Körpers,
Figur 14b
   der optische Mehrfachschalter nach Figur 14a im reflektierenden Schaltzustand,
Figur 15
   ein Ausführungsbeispiel des Schaltelements als optischer Mehrfachschalter, wobei die einfallenden und die reflektierten Lichtstrahlen in einer Ebene liegen,
Figur 16a
   ein weiteres Ausführungsbeispiel des Schaltelements im transmittierenden Zustand als Mehrfachschalter mit einem bewegbaren Körper mit im Querschnitt unterschiedlichen Bereichen, dargestellt in der Ebene der transmittierten Lichtstrahlen,
Figur 16b
   das Schaltelement nach Figur 16a im reflektierenden Schaltzustand, wobei die Ebene der einfallenden Lichtstrahlen mit der hier nicht dargestellten Ebene ihrer reflektierten Lichtstrahlen einen Winkel von etwa 90° bildet,
Figur 17
   eine Schaltanordnung mit 4 Ein- und 4 Ausgangskanälen mit nach Art einer 4x4 Matrix angeordneten Schaltelementen in perspektivischer schematischer Darstellung,
Figur 18
   eine Schaltanordnung mit 2x3 Ein- und 2x3 Ausgangskanälen mit nach Art einer 2x3 Matrix angeordneten Schaltelementen in schematischer Darstellung,
Figur 19
   eine Schaltanordnung mit 3 Ein- und 2x3 Ausgangskanälen mit 3 nach Art einer Diagonalen einer 3x3 Matrix angeordneten Schaltelementen in schematischer Darstellung,
Figur 20
   eine der in Figur 18 gezeigten Schaltanordnung entsprechende Ausführungsform, bei der die Eingänge und Ausgänge gegenüberliegend angeordnet sind.

Die Figuren 1 bis 4 zeigen in schematischer Darstellung die Schaltzustände eines Schaltelements 1, das auf dem Prinzip des Flüssigkeitsfilms beruht. Das Schaltelement weist einen Basiskörper 2 aus transparentem Material mit einer Ausnehmung 3 auf. Die Ausnehmung 3 umfaßt eine Grenzfläche 4, auf die das einfallende Licht 5, unter einem Winkel von etwa 45° trifft. Die rückwärtigen Seitenflächen 6,7 der Ausnehmung 3 schließen mit der Grenzfläche 4 einen Winkel von jeweils 45° ein. An der Unter- und Oberseite wird die Ausnehmung 3 von ebenen Flächen 8,9 begrenzt, die mit Seitenflächen 6,7 einen Winkel von 90° einschließen.

In der Ausnehmung 3 befindet sich ein Körper 10 mit dem Querschnitt eines gleichschenkeligen Dreiecks. Der dreieckförmige Körper ist in der Ausnehmung 3 mittels einer in den Figuren 1 bis 4 nicht dargestellten Betätigungseinrichtung in der XY-Ebene unter Bildung eines schmalen Spaltes 12 zwischen seinen Seitenflächen und den Seitenflächen 6,7 bzw. der Grenzfläche 4 der Ausnehmung 3 sowie seiner Ober- und Unterseite und den oberen und unteren Flächen 8,9 der Ausnehmung bewegbar. Die Ausnehmung 3 enthält darüber hinaus eine Flüssigkeit 13 mit einem Brechungsindex, der etwa gleich dem Brechungsindex des Materials ist, aus dem der Basiskörper und der bewegbare Körper bestehen. Die Flüssigkeitsmenge ist derart bemessen, daß sich aufgrund von Adhäsionskräften ein Flüssigkeitsfilm in dem schmalen Spalt 12 bildet, der übrige Bereich in der Ausnehmung 3 im wesentlichen jedoch nicht mit der Flüssigkeit gefüllt ist.

In dem in den Figuren 1 und 2 gezeigten Schaltzustand ist die Grenzfläche 4, auf die das einfallende Licht 5 trifft, nicht mit der Flüssigkeit 13 benetzt, so daß das einfallende Licht an der Grenzfläche totalreflektiert wird. Das einfallende Licht 5 und das aus dem Basiskörper 2 austretende Licht 14 schließt einen Winkel von 90° ein.

Um das Schaltelement 1 in den transmittierenden Schaltzustand umzuschalten, wird der dreieckförmige Körper 10 mittels der Betätigungseinrichtung derart in der Ausnehmung 3 verschoben, daß der schmale Spalt 12 zwischen der Grenzfläche 4 und dem Körper 10 liegt, so daß der Bereich der Grenzfläche, auf der das einfallende Licht 5 trifft, vollständig von der Flüssigkeit 13 bedeckt ist. Dabei kann der bewegbare Körper 10 die in den Figuren 3a bzw. 4a und 3b bzw. 4b dargestellten Positionen einnehmen. Allein entscheidend ist, daß der im Strahlengang des einfallenden Lichts 5 liegende Bereich der Grenzfläche 4 vollständig mit der Flüssigkeit bedeckt ist. Da der Basiskörper 1, die Flüssigkeit 13 und der dreieckförmige Körper 10 in etwa den gleichen Brechungsindex haben, tritt das einfallende Licht 5 aus dem Basiskörper 2 wieder aus, ohne seine Richtung zu verändern. Im rechten Winkel zu den Seitenflächen 6,7 einfallendes Licht wird in diesem Schaltzustand ebenfalls nicht reflektiert, sondern kann ungehindert durch das Schaltelement hindurchtreten (austretender Lichtstrahl 14).

Die Figuren 5a und 5b zeigen eine Ausführungsform des Schaltelements 15, daß sowohl nach dem Prinzip des Flüssigkeitsfilms als auch nach dem Prinzip der Verdrängung arbeiten kann. Das Schaltelement 15 unterscheidet sich von dem unter Bezugnahme auf die Figuren 1 bis 4 beschriebenen Schaltelement 1 dadurch, daß der dreieckförmige Körper 16 in vertikaler Richtung bewegbar in der Ausnehmung 20 des Basiskörpers 21 geführt ist.

Die Figuren 6a und 6b zeigen die Ausführungsform eines auf dem Prinzip des Flüssigkeitsfilms beruhenden Schaltelements 15 nach den Figuren 5a bzw. 5b im Schnitt in schematischer Darstellung. Aufgrund von Adhäsionskräften verbleibt die Flüssigkeit 22 bei der Bewegung des dreieckförmigen Körpers 16 zwischen den Oberflächen. In dem in Figur 6a dargestellten Schaltzustand ist die Grenzfläche 19 nicht mit dem Flüssigkeitsfilm 22 bedeckt, so daß das einfallende Licht 23 totalreflektiert wird. Befindet sich der dreieckförmige Körper 16 in der Höhe des Strahlengangs, so wird das einfallende Licht 23 nicht abgelenkt (Figur 6b). Der Flüssigkeitsfilm wirkt zudem als Gleitfilm und reduziert die Abnutzung der reflektierenden Flächen.

Die Betätigung des dreieckförmigen Körpers 16 erfolgt mittels einer elektromagnetischen Betätigungseinrichtung 24, die außerhalb der Ausnehmung oberhalb des bewegbaren Körpers 16 angeordnet ist. Die Betätigungseinrichtung 24 weist einen Elektromagneten 25 auf, z. B. mit einer lithographisch hergestellten Spule, wobei der bewegbare Körper 16 an seiner Ober- und Unterseite mit einem magnetischen oder magnetisierbarem Material 16' versehen ist.

Die Figuren 7 und 8 zeigen die Ausführungsform eines auf dem Prinzip der Verdrängung beruhenden Schaltelements nach Figur 5a bzw. 5b im Schnitt in schematischer Darstellung, wobei die Elemente, die den Elementen des Ausführungsbeispiels gemäß den Figuren 5a bis 6b entsprechen, mit den gleichen Bezugszeichen versehen sind. Der bewegbare Körper 16 wird mittels der elektromagnetischen Betätigungseinrichtung 24 in vertikaler Richtung bewegt. In dem in Figur 7 dargestellten Schaltzustand der Totalreflexion, liegt der Flüssigkeitsspiegel außerhalb des Bereichs der Grenzfläche 19, auf die das einfallende Licht 23 trifft. Im Schaltzustand der Transmission, wird die Flüssigkeit von einem dreieckförmigen Körper 16 verdrängt, so daß der untere Bereich der Ausnehmung vollständig mit einem Medium aufgefüllt ist, daß etwa den gleichen Brechungsindex wie der Basiskörper hat (Figur 8).

Die Figuren 9a und 9b zeigen eine auf dem Prinzip des Flüssigkeitsfilms beruhende Ausführungsform, wobei die Ausnehmung 3 und der bewegbare Körper 10 in der Ebene des Strahlengangs eines Lichtstrahls einen viereckigen Querschnitt aufweisen. Zwischen den parallelen Flächen 60, 61 der Ausnehmung 3 und dem bewegbaren Körper 10 befindet sich ein Flüssigkeitsfilm 26. Figur 9a zeigt das Schaltelement in dem transmittierenden Zustand. In Figur 9b befindet sich der bewegbare Körper 10 außerhalb des Strahlengangs, so daß die beiden Flächen 60, 61 nicht mit der Flüssigkeit benetzt sind. Mit diesem Schaltelement kann der Eingang E1 wahlweise mit dem Ausgang A1 oder A2 verbunden werden, wobei gleichzeitig der Eingang E2 mit dem Ausgang A2 bzw. A1 verbunden wird.

Die Figuren 10a und 10b zeigen eine weitere Ausführungsform des Schaltelements mit einem in der Ebene des Strahlengangs eines Lichtstrahls parallelogrammförmigen Querschnitt der Ausnehmung 3 und des bewegbaren Körpers 10. Dieses Schaltelement kann nach dem Prinzip des Flüssigkeitsfilms und nach dem Prinzip der Verdrängung oder einer Kombination aus beiden Prinzipien betrieben werden. Die beiden parallelen Seitenflächen 60, 61 der Ausnehmung 3 sind so weit voneinander entfernt, daß im Gegensatz zu den Figuren 9a und 9b der Eingang E2 und der Ausgang A1 im transmittierenden Schaltzustand nicht miteinander verbunden sind. Im transmittierenden Zustand ist in Figur 10a der Eingang E1 mit dem Ausgang A2 verbunden. Figur 10b zeigt den reflektierenden Schaltzustand, bei dem die Eingänge E1 und E2 mit den Ausgängen A1 bzw. A2 verbunden sind.

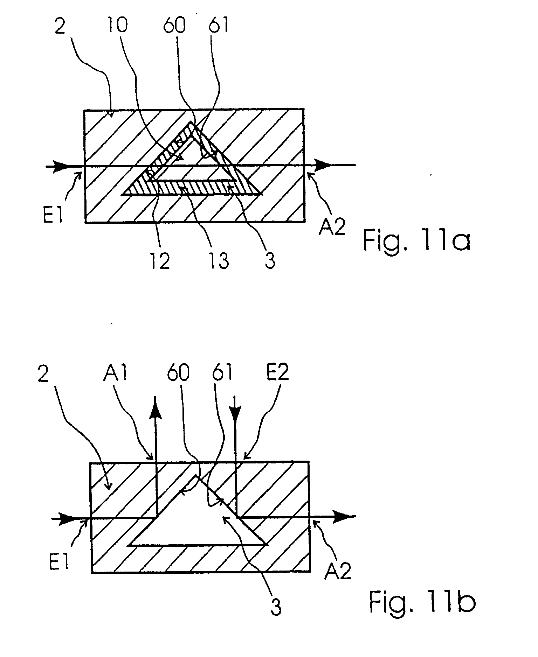

Ein weiteres Ausführungsbeispiel ist in den Figuren 11a und 11b dargestellt. Die Ausnehmung 3 und der bewegbare Körper 10 besitzen hier die Form eines gleichschenkeligen Dreiecks. Der Winkel zwischen den beiden Seitenflächen 60, 61 beträgt hier etwa 45°. In Figur 11a ist der transmittierende Schaltzustand dargestellt, bei dem der Eingang E1 mit dem Ausgang A2 verbunden ist. Im reflektierenden Schaltzustand (Figur 11b) werden an den die Grenzflächen bildenden Seitenflächen 60, 61 die einfallenden Lichtstrahlen im wesentlichen totalreflektiert, so daß die Eingänge E1 und E2 mit den Ausgängen A1 bzw. A2 verbunden sind.

Eine zusätzliche Ausführungsform des Schaltelements ist in Figur 12 im transmittierenden Schaltzustand dargestellt. Im reflektierenden Schaltzustand hat dieses Schaltelement die gleiche Wirkungsweise wie das in Figur 11b dargestellte Schaltelement. Durch die beiden zusätzlichen Flächen 62, 63 am Basiskörper 2, die hier einen Winkel von etwa 90° einnehmen, wird ein Lichtstrahl aus dem Eingang E2 im transmittierenden Schaltzustand durch die Ausnehmung 3 hindurch in Richtung des Ausgangs A1 reflektiert. Vorzugsweise befindet sich außerhalb des Schaltkörpers 2 ein optisch dünneres Medium, so daß es sich bei der Reflexion an den Flächen 62, 63 um eine Totalreflexion handelt. Um diese Flächen 62, 63 vor äußeren Einflüssen zu schützen, können diese auch in Form einer zusätzlichen Ausnehmung im Basiskörper 2 untergebracht sein.

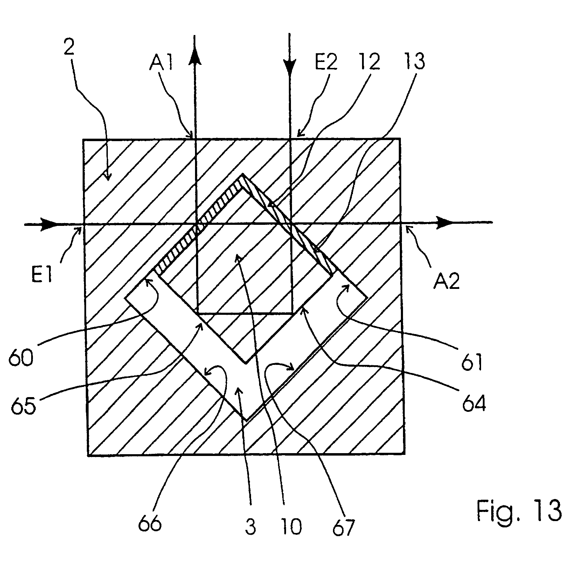

Das in Figur 12 dargestellte Prinzip der Umlenkung eines transmittierenden Lichtstrahls liegt auch der Darstellung eines transmittierenden Schaltelements in Figur 13 zu Grunde. Der Spalt zwischen den beiden Seitenflächen 60, 61 der Ausnehmung 3 und dem bewegbaren Körper 10 ist hier mit einem Flüssigkeitsfilm 13 gefüllt. Dagegen sind die beiden gegenüberliegenden Flächen 64, 65 des bewegbaren Körpers 10, aufgrund des größeren Abstands zu den Seitenflächen 66, 67 der Ausnehmung, nicht mit der Flüssigkeit 13 benetzt. Die beiden Flächen 64, 65 nehmen den Winkel von etwa 90° zueinander ein, so daß ein aus dem Eingang E2 kommender und durch die Fläche 61 der Ausnehmung 3 hindurchtretender Lichtstrahl an diesen beiden Flächen 64, 65 in Richtung des Ausgangs A1 totalreflektiert wird.

In Figur 14a ist ein Schaltelement im transmittierenden Schaltzustand dargestellt, das als optischer Mehrfachschalter dient. Alle vier Flächen der im Querschnitt quadratischen Ausnehmung 3 dienen als Grenzflächen zur wahlweisen Transmission oder Reflexion von Licht. In dem hier dargestellten Beispiel sind die Eingänge E1, E2, E3 und E4 mit den Ausgängen A2, A3, A4 bzw. A1 verbunden. In dem in Figur 14b dargestellten reflektierenden Schaltzustand sind die Eingänge E1, E2, E3 und E4 mit den Ausgängen A1, A2, A3 bzw. A4 verbunden.

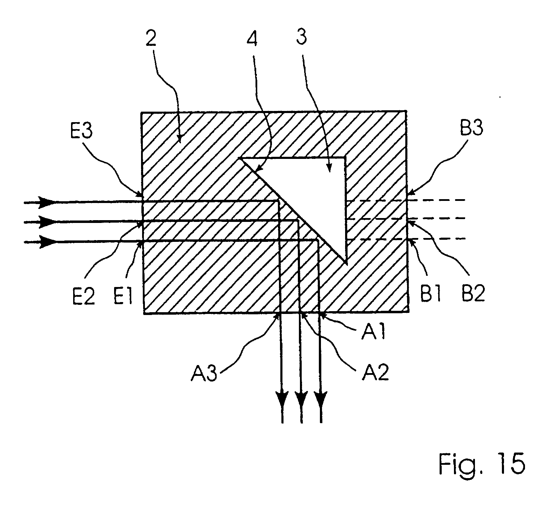

Figur 15 zeigt ein Schaltelement mit mehreren optischen Ein- und Ausgängen im reflektierenden Schaltzustand. Auf die eine Grenzfläche 4 der dreieckförmigen Ausnehmung 3 treffen drei Lichtstrahlen aus den Eingängen E1, E2 und E3 und werden in Richtung der Ausgänge A1, A2 und A3 totalreflektiert. In dem hier nicht dargestellten transmittierenden Schaltzustand treffen die einfallenden Lichtstrahlen auf die hier angedeuteten Ausgänge B1, B2 bzw. B3. Die einfallenden und die reflektierten Lichtstrahlen liegen hier im wesentlichen in einer Ebene.

In einer anderen Ausführungsform eines optischen Mehrfachschalters bildet die Ebene der einfallenden Lichtstrahlen mit der Ebene ihrer reflektierten Lichtstrahlen einen Winkel von vorzugsweise 70° bis 110°. Dies ist in den Figuren 16a und 16b anhand eines Querschnitts durch ein optisches Schaltelement, beispielsweise nach Figur 11a, 11b oder Figur 12, mit zwei in der Querschnittsebene liegenden Eingängen gezeigt.

Figur 16a zeigt den transmittierenden Schaltzustand. Die Eingänge E1(1) und E1(2) sind auf die Ausgänge A2(1) bzw. A2(2) geschaltet. Anstatt je eines sich über die Seitenflächen 60 sowie 61 erstreckenden Flüssigkeitsfilms zwischen der Ausnehmung 3 und dem bewegbaren Körper 10, ist der bewegbare Körper 10 so geformt, daß er Bereiche größeren Querschnitts und dazwischenliegende Bereiche kleineren Querschnitts aufweist. Die Bereiche größeren Querschnitts grenzen so nahe an die Ausnehmung 3 heran, daß sich dort zwischen dem bewegbaren Körper 10 und der Grenzfläche 60, 61 der Ausnehmung 3 ein Flüssigkeitsfilm 13 bildet. Zwischen den Bereichen kleineren Querschnitts des bewegbaren Körpers und der Grenzfläche 60, 61 der Ausnehmung 3 besteht kein Flüssigkeitsfilm. Um vom transmittierenden in den reflektierenden Schaltzustand zu gelangen, braucht der bewegbare Körper 10 nur soweit verschoben werden, daß in den Strahlengang ein Bereich kleineren Querschnitts des bewegbaren Körpers zu liegen kommt, so daß die Grenzflächen 60,61 im Bereich des Strahlengangs nicht mit der Flüssigkeit 13 benetzt sind (Figur 16b). Die hier dargestellten die Ausgänge A2(1) und A2(2) verlassenden Lichtstrahlen stellen die aus den Eingängen E2(1) und E2(2) kommenden, an der Grenzfläche 61 reflektierten Lichtstrahlen dar.

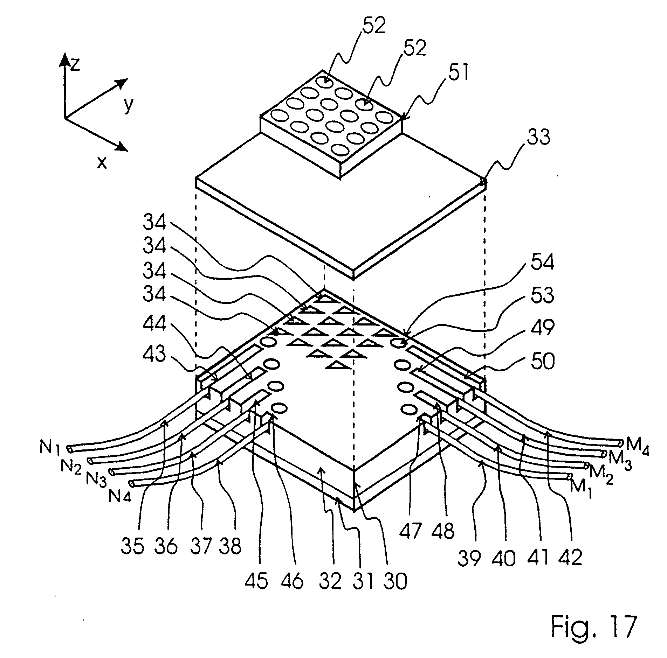

Figur 17 zeigt einen 4x4 Matrixschalter, mit dem jeder der 4 optischen Eingänge N₁ bis N₄ auf jeden der 4 optischen Ausgänge M₁ bis M₄ geschaltet werden kann. Der Matrixschalter weist einen flachen Basiskörper 30 auf, der aus einer Bodenplatte 31, einer strukturierten mittleren Platte 32 und einer Deckplatte 33 besteht. Die strukturierte Platte 32 nimmt nach Art einer 4x4 Matrix angeordnete Schaltelemente 1,15, der oben beschriebenen Art auf. Die Ausnehmungen der Schaltelemente 1,15, die mit der oberen Platte 33 abgedeckt werden, sind in Figur 17 mit dem Bezugszeichen 34 versehen. Die Eingangs- und Ausgangsfasern 35 bis 38 bzw. 39 bis 42 sind kaskadenartig in den Kanälen 43 bis 46 bzw. 47 bis 50 der strukturierten Platte 32 angeordnet, um unabhängig vom jeweiligen Schaltzustand eine einheitliche optische Weglänge zu gewährleisten. Die Eingangskanäle 43 bis 46 verlaufen dabei etwa im rechten Winkel zu den Ausgangskanälen 47 bis 50, wobei die Grenzflächen der Ausnehmungen 34 der Schaltelemente 1, 15 in einem Winkel von etwa 45° zu den Eingangs- bzw. Ausgangskanälen angeordnet sind. Zur Kollimierung bzw. Fokussierung des Lichts sind Kugellinsen 53 vorgesehen. Die Kugellinsen 53 sind in Vertiefungen 54 der strukturierten Platte 32 des Basiskörpers 30 eingesetzt, die zwischen den Lichtaustrittsenden der Eingangsfasern 35 - 38 bzw. Ausgangsfasern 39 - 42 und den Schaltelementen 1, 15 angeordnet sind. Auf der Deckplatte 33 des Basiskörpers 30 ist eine weitere Platte 51 befestigt, in der die den einzelnen Schaltelementen zugeordneten Elektromagneten 52 der Betätigungseinrichtung integriert sind. Durch Umschalten der einzelnen Schaltelemente von dem transmittierenden in den reflektierenden Zustand oder umgekehrt kann jeder Eingangskanal N₁ bis N₄ wahlweise auf jeden Ausgangskanal M₁ bis M₄ geschaltet werden.

Figur 18 zeigt eine weitere Ausführungsform einer Schaltanordnung mit 5 optischen Eingängen E1(1), E1(2) und E2(1), E2(2), E2(3) sowie 5 optischen Ausgängen A1(1), A1(2) und A2(1), A2(2), A2(3) und 2x3 erfindungsgemäßen Schaltelementen mit jeweils zwei parallelen Seitenflächen in Matrixanordnung. In dieser schematischen Darstellung wurden der Übersichtlichkeit halber die Ein- und Ausgangslichtwellenleiter und optische Elemente zur Strahlfokussierung weggelassen. Die Schaltelemente in den Matrixpositionen (1, 1) und (2, 2) sind in diesem Beispiel auf Reflexion geschaltet, während die übrigen Schaltelemente, in der Figur 18 schraffiert dargestellt, auf Transmission geschaltet sind. Dadurch werden die Eingänge E1(1), E1(2), E2(1), E2(2), E2(3) mit den Ausgängen A1(1), A1(2), A2(1), A2(2) bzw. A1(3) optisch verbunden.

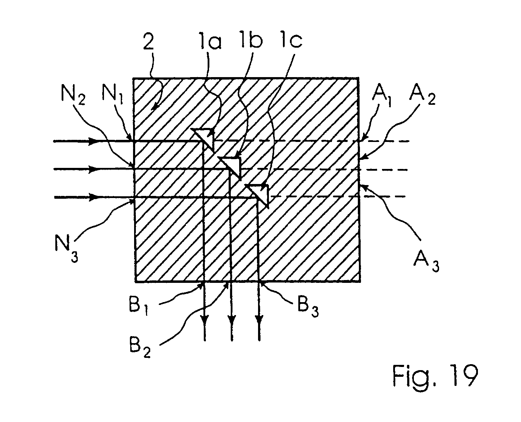

Figur 19 zeigt eine Ausführungsform einer Schaltanordnung mit drei diagonal angeordneten Schaltelementen 1a, 1b, 1c in schematischer Darstellung, bei der drei optische Eingänge N₁ bis N₃ wahlweise auf drei optische Ausgänge A₁ bis A₃ oder auf drei optische Ausgänge B₁ bis B₃ geschaltet werden können. Das Schaltelement 1a ist dem Eingang N₁ und dem Ausgang A₁ bzw. B₁ zugeordnet, das Schaltelement 1b ist dem Eingang N₂ und dem Ausgang A₂ bzw. B₂ und das Schaltelement 1c ist dem Eingang N₃ und dem Ausgang A₃ bzw. B₃ zugeordnet. Werden die Schaltelemente 1a, 1b, 1c in den transmittierenden Zustand geschaltet, sind die Eingänge N₁, N₂, N₃ mit den Ausgängen A₁ bzw. A₂ bzw. A₃ verbunden. Im reflektierenden Schaltzustand wird das Licht abgelenkt, so daß die Eingänge N₁, N₂, N₃ mit den Ausgängen B₁ bzw. B₂ bzw. B₃ verbunden sind. Ist nur ein gleichzeitiges Schalten der drei Schaltelemente in den transmittierenden bzw. reflektierenden Schaltzustand gewünscht, so kann anstelle von drei einzelnen Schaltelementen auch nur ein entsprechend größer dimensioniertes Schaltelement vorgesehen sein, auf dessen Grenzfläche das Licht der drei optischen Kanäle einfällt (Figur 15).

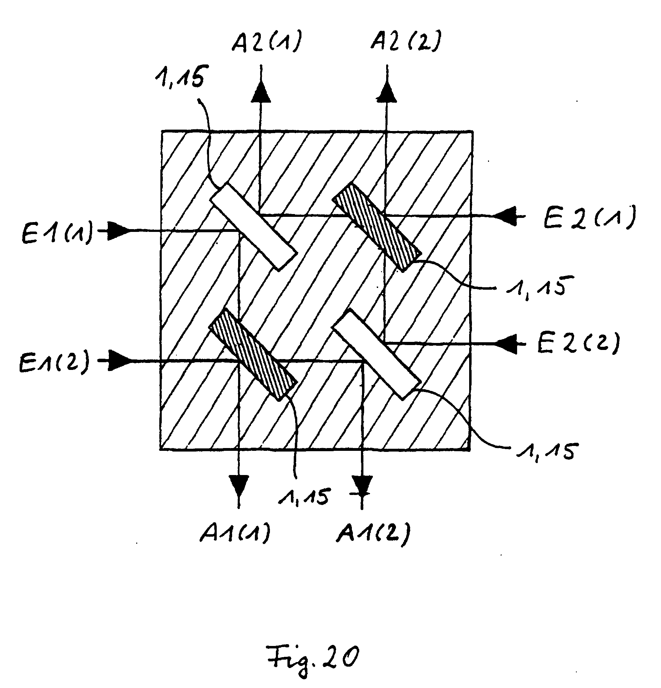

Figur 20 zeigt eine Ausführungsform einer Schaltanordnung, die sich von der in Figur 18 dargestellten Ausführungsform dadurch unterscheidet, daß die Eingänge E1 (1) und E2 (2) den Eingängen E2 (1) und E2 (2) gegenüberliegen. Dementsprechend sind auch die Ausgänge gegenüberliegend angeordnet. Eine solche Anordnung ist möglich, wenn immer mindestens ein Schaltelement 1,15 der zwischen den gegenüberliegenden Eingängen liegenden Schaltelementen auf Reflexion geschaltet ist. Je nach der Breite der Schaltelemente 1,15 sind die gegenüberliegenden Eingänge und Ausgänge geringfügig versetzt zueinander angeordnet.

Die Schaltelemente müssen zwei Flächen zur Reflexion des Lichts aufweisen. Da die linken Eingangskanäle immer nur auf die unteren Ausgangskan äle geschaltet werden und die rechten Eingangskanäle immer nur auf die oberen Ausgangskanäle, findet kein Versatz der Lichtstrahlen durch die Breite der Schaltzelle statt, wie dies beispielsweise bei der Ausführungsform gemäß der Figur 18 der Fall sein kann. Sinnvoll ist diese Erweiterung für Schalt-Matrizen mit mindestens einer Zeile (2 gegenüberliegende Eingänge) und mindestens zwei Spalten (zweimal 2 gegenüberliegende Ausgänge).

### Bezugszeichenliste

- 1: Schaltelement
- 2: Basiskö rper
- 3: Ausnehmung
- 4: Grenzfläche
- 5: einfallender Lichtstrahl
- 6: rückwärtige Seitenfläche der Ausnehmung
- 7: rückwärtige Seitenfläche der Ausnehmung
- 8: Unterseite der Ausnehmung
- 9: Oberseite der Ausnehmung
- 10: bewegbarer Körper
- 12: Spalt
- 13: Flüssigkeit
- 14: austretender Lichtstrahl
- 15: Schaltelement
- 16: bewegbarer Körper
- 16': magnetische Schicht
- 19: Grenzfläche
- 20: Ausnehmung
- 21: Basiskörper
- 22: Flüssigkeit
- 23: einfallendes Licht
- 24: Betätigungseinrichtung
- 25: Elektromagnet
- 26: Flüssigkeit
- 30: Basiskörper
- 31: Bodenplatte
- 32: strukturierte Platte
- 33: Deckplatte
- 34: Ausnehmung
- 35 - 38: Eingangsfaser
- 39 - 42: Ausgangsfaser
- 43 - 46: Kanal
- 47 - 50: Kanal
- 51: Platte mit Betätigungseinrichtung
- 52: Elektromagnet
- 53: Kugellinse
- 54: Vertiefung
- 60: Seitenfläche der Ausnehmung
- 61: Seitenfläche der Ausnehmung
- 62: zusätzliche Fläche des Basiskörpers
- 63: zusätzliche Fläche des Basiskörpers
- 64: Seitenfläche des bewegbaren Körpers
- 65: Seitenfläche des bewegbaren Körpers
- 66: Seitenfläche der Ausnehmung
- 67: Seitenfläche der Ausnehmung

## Patentansprüche

1. Optisches Schaltelement zum Ändern der Ausbreitungsrichtung von mindestens einem Lichtstrahl mit einem zumindest entlang des Strahlengangs lichtdurchlässigen Basiskörper (2), der zur Bildung mindestens einer Grenzfläche (4), auf die der einfallende Lichtstrahl (5) auftrifft, zwischen einem optisch dichteren Medium und einem optisch dünneren Medium eine Ausnehmung (3) aufweist, die eine Flüssigkeit (13) und einen in der Ausnehmung (3) bewegbaren Körper (10,16) enthält,
wobei der Basiskörper (2) und der bewegbare Körper (10,16) zumindest in Teilen aus den im verwendeten Wellenlängenbereich transparenten Materialien bestehen, und die Flüssigkeit derart beschaffen und der bewegbare Körper derart ausgebildet und in der Ausnehmung zwischen einer Position, in der das optische Schaltelement in dem transmittierenden Schaltzustand ist, und einer Position, in der das optische Schaltelement in dem reflektierenden Schaltzustand, bewegbar ist,
daß im transmittierenden Schaltzustand sich der bewegbare Körper (10,16) im Strahlengang des einfallenden Lichts befindet und zumindest der im Strahlengang des einfallenden Lichts liegende Bereich eines Spaltes (12) zwischen der Grenzfläche (4) und der Oberfläche des bewegbaren Körpers vollständig mit der Flüssigkeit gefüllt ist,
wobei im reflektierenden Schaltzustand zumindest der im Strahlengang des einfallenden Lichts liegende Bereich der Grenzfläche (4) frei von der Flüssigkeit ist, so daß das einfallende Licht an der Grenzfläche im wesentlichen reflektiert wird, und

2. Optisches Schaltelement nach Anspruch 1, wobei der Basiskörper (2), der bewegbare Körper (10,16) und die Flüssigkeit (13) im wesentlichen den gleichen Brechungsindex aufweisen.

3. Optisches Schaltelement nach den Ansprüchen 1 oder 2, wobei der bewegbare Körper (10, 16) mit mindestens einem Körper oder einer Schicht (16') aus magnetischem oder magnetisierbaren Material versehen ist und daß die Betätigungseinrichtung (24) vorzugsweise mindestens einen außerhalb der Ausnehmung angeordneten Elektromagneten (25) und/oder Permanentmagneten aufweist.

4. Optisches Schaltelement nach den Ansprüchen 1 oder 2, wobei der bewegbare Körper (10, 16) mit mindestens einer vorzugsweise piezoelektrischen oder thermoelektrischen Betätigungsreinrichtung verbunden ist.

5. Optisches Schaltelement nach einem der Ansprüche 1 bis 4, wobei die Ausnehmung (20) soweit mit der Flüssigkeit (26) gefüllt ist, daß im reflektierenden Schaltzustand der im Strahlengang des einfallenden Lichts (23) liegende Bereich der Grenzfläche außerhalb des Flüssigkeitsspiegels liegt, und daß im transmittierenden Schaltzustand der bewegbare Körper derart in die Flüssigkeit bewegt ist, daß der im Strahlengang des einfallenden Lichts liegende Bereich des Spaltes durch Verdrängung mit Flüssigkeit gefüllt ist.

6. Optisches Schaltelement nach einem der Ansprüche 1 bis 5, wobei ein Flüssigkeitsfilm zwischen einem Teil der Oberfläche des bewegbaren Körpers (16) und einem Teil der Wandung der Ausnehmung (20) ausgebildet ist und daß der bewegbare Körper (16) derart in der Ausnehmung bewegbar ist, daß im transmittierenden Schaltzustand der im Strahlengang des einfallenden Lichts (23) liegende Bereich des Spaltes zwischen der Grenzfläche (19) und der Oberfläche des bewegbaren Körpers (16) mit dem Flüssigkeitsfilm gefüllt ist, und daß im reflektierenden Schaltzustand der im Strahlengang des einfallenden Lichts (23) liegende Bereich der Grenzfläche (19) frei von dem Flüssigkeitsfilm ist.

7. Optisches Schaltelement nach einem der Ansprüche 1 bis 6, wobei die Ausnehmung (3) und der bewegbare Körper (10, 16) in der Ebene des Strahlengangs eines Lichtstrahls im wesentlichen einen dreieckförmigen Querschnitt aufweisen.

8. Optisches Schaltelement nach einem der Ansprüche 1 bis 6, wobei die Ausnehmung (3) und der bewegbare Körper (10, 16) in der Ebene des Strahlengangs eines Lichtstrahls im wesentlichen einen viereckförmigen Querschnitt aufweisen.

9. Optisches Schaltelement nach einem der Ansprüche 1 bis 8, wobei die Grenzfläche (4,19) so zu dem einfallenden Lichtstrahl angeordnet ist, daß in dem reflektierenden Schaltzustand das einfallende Licht an der Grenzfläche im wesentlichen totalreflektiert wird.

10. Optisches Schaltelement nach Anspruch 9, wobei der Winkel zwischen dem einfallenden Lichtstrahl und der Grenzfläche (4, 19) 40° bis 50° beträgt.

11. Optisches Schaltelement nach den Ansprüchen 1 bis 10, wobei die Grenzfläche (4,19) so geformt ist, daß im reflektierenden Schaltzustand Licht durch Reflexion an der Grenzfläche (4, 19) zumindest teilweise gebündelt wird.

12. Optisches Schaltelement nach den Ansprüchen 1 bis 11, wobei der Basiskörper (2) mindestens eine weitere Ausnehmung zur Aufnahme und Halterung von Lichtwellenleitern, insbesondere von einzelnen Fasern, Faserbändchen oder Fasersteckern, aufweist.

13. Optisches Schaltelement nach den Ansprüchen 1 bis 12, wobei der Basiskörper (2) mindestens eine weitere Ausnehmung zur Aufnahme von optischen Elementen, insbesondere von Mikrolinsen oder GRIN-Linsen, aufweist.

14. Optisches Schaltelement nach den Ansprüchen 1 bis 13, wobei der Basiskörper (2) mindestens eine weitere Ausnehmung aufweist, die so geformt und im Strahlengang angeordnet ist, daß sie einfallendes Licht im wesentlichen bündelt.

15. Optisches Schaltelement nach einem der Ansprüche 1 bis 14, wobei eine Fläche der Ausnehmung zur wahlweisen Reflexion oder Transmission von Lichtstrahlen vorgesehen ist.

16. Optisches Schaltelement nach einem der Ansprüche 1 bis 14, wobei zwei Flächen (60, 61) der Ausnehmung (3) zur wahlweisen Reflexion oder Transmission von Lichtstrahlen vorgesehen sind.
wobei mindestens eine Betätigungseinrichtung (24) zum Umschalten des bewegbaren Körpers (10,16) zwischen dem transmittierenden und dem reflektierenden Schaltzustand vorgesehen ist.

17. Optisches Schaltelement nach Anspruch 16, wobei die beiden reflektierenden Flächen (60,61) im wesentlichen parallel zueinander angeordnet sind.

18. Optisches Schaltelement nach Anspruch 16, wobei die beiden reflektierenden Flächen (60, 61) in einem Winkel von 70° bis 110° zueinander angeordnet sind.

19. Optisches Schaltelement nach einem der Ansprüche 1 bis 18, wobei mindestens zwei optische Eingänge in einem Winkel von 70° bis 110° zueinander angeordnet sind.

20. Optisches Schaltelement nach dem Anspruch 18 oder 19, wobei die Ausnehmung (3) und der bewegbare Körper (10) in der Ebene des Strahlengangs eines Lichtstrahls im wesentlichen einen Querschnitt eines gleichschenkligen Dreiecks aufweisen.

21. Optisches Schaltelement nach einem der Ansprüche 18 bis 20, wobei der Basiskörper (2) zwei zusätzliche Flächen (62, 63) aufweist, die im wesentlichen gegenüber den beiden reflektierenden Flächen (60, 61) der Ausnehmung (3) angeordnet sind und daß diese beiden Flächen des Basiskörpers einen Winkel von 70° bis 110° bilden und so angeordnet sind, daß im transmittierenden Schaltzustand mindestens ein Lichtstrahl an beiden Flächen (62, 63) totalreflektiert wird.

22. Optisches Schaltelement nach Anspruch 21, wobei die beiden zusätzlichen Flächen (62, 63) durch mindestens eine zusätzliche Ausnehmung im Basiskörper gebildet werden.

23. Optisches Schaltelement nach dem Anspruch 18 oder 19, wobei die Ausnehmung und der bewegbare Körper (10) in der Ebene des Strahlengangs eines Lichtstrahls im wesentlichen einen viereckförmigen Querschnitt aufweisen,
und daß zumindest der im Strahlengang liegende Bereich des Spalts zwischen den beiden reflektierenden Flächen (60, 61) der Ausnehmung (3) und den benachbarten Flächen des bewegbaren Körpers im transmittierenden Schaltzustand mit der Flüssigkeit (13) gefüllt ist, während die diesen beiden Flächen des bewegbaren Körpers gegenüberliegende dritte und vierte Fläche (64, 65) des bewegbaren Körpers nicht mit der Flüssigkeit bedeckt ist, so daß im transmittierenden Schaltzustand mindestens ein Lichtstrahl an beiden Flächen (64, 65) im bewegbaren Körper totalreflektiert wird.

24. Optisches Schaltelement nach einem der Ansprüche 1 bis 23, wobei mindestens drei Flächen der Ausnehmung (3) zur wahlweisen Reflexion oder Transmission von Lichtstrahlen vorgesehen sind.

25. Optisches Schaltelement nach Anspruch 24, wobei die Ausnehmung und der bewegbare Körper in der Ebene des Strahlengangs eines Lichtstrahls im wesentlichen einen Querschnitt eines Quadrats aufweisen.

26. Optisches Schaltelement nach einem der Ansprüche 1 bis 25, wobei mindestens ein Teil der einfallenden Lichtstrahlen so zu der Fläche (4) der Ausnehmung (3), von der sie im reflektierenden Schaltzustand reflektiert werden, angeordnet ist, daß dieser Teil der einfallenden Lichtstrahlen mit den entsprechenden reflektierten Lichtstrahlen im wesentlichen in einer Ebene liegt.

27. Optisches Schaltelement nach einem der Ansprüche 1 bis 25, wobei mindestens ein Teil der einfallenden Lichtstrahlen so zu der Fläche der Ausnehmung, von der sie im reflektierenden Schaltzustand reflektiert werden, angeordnet ist, daß die Ebene dieses Teils der einfallenden Lichtstrahlen mit der Ebene der entsprechenden reflektierten Lichtstrahlen einen Winkel von 70° bis 110° bildet.

28. Optisches Schaltelement nach einem der Ansprüche 1 bis 27, wobei der bewegbare Körper (10) mindestens zwei Bereiche mit parallel zu der Ebene des Strahlengangs eines Lichtstrahls größeren Querschnitts aufweist, die so nahe an mindestens eine Fläche (60, 61) der Ausnehmung angrenzen, daß zwischen diesen Bereichen und der entsprechenden Fläche der Ausnehmung ein Flüssigkeitsfilm bestehen bleibt, während zwischen den anderen Bereichen mit kleinerem Querschnitt des bewegbaren Körpers und der entsprechenden Fläche der Ausnehmung kein Flüssigkeitsfilm besteht.

29. Optisches Schaltelement nach einem der Ansprüche 1 bis 28, wobei der Basiskörper (2) und/ oder der bewegbare Körper (10, 16) zumindest zu einem Teil aus einem transparenten Polymer, einem Glas oder einem transparenten nach einem Sol-Gel-Prozeß hergestellten Material besteht.

30. Schaltanordnung mit N optischen Eingängen (E1,E2) und M optischen Ausgängen (A1,A2) mit N, M ≥ 1, die nach Art einer NxM Schalt-Matrix mit N-Zeilen und M-Spalten angeordnete Schaltelemente (1,15) aufweist, wobei jedes optische Schaltelement zum Ändern der Ausbreitungsrichtung von mindestens einem Lichtstrahl (5) dient und
einen zumindest entlang des Strahlengangs lichtdurchlässigen Basiskörper (2) enthält, der zur Bildung mindestens einer Grenzfläche (4), auf die der einfallende Lichtstrahl (5) auftrifft, zwischen einem optisch dichteren Medium und einem optisch dünneren Medium eine Ausnehmung (3) aufweist, die eine Flüssigkeit (13) und einen bewegbaren Körper (10,16) enthält, wobei der Basiskörper (2) und der bewegbare Körper (10,16) zumindest in Teilen aus den im verwendeten Wellenlängenbereich transparenten Materialien bestehen, und die Flüssigkeit derart beschaffen und der bewegbare Körper derart ausgebildet und in der Ausnehmung zwischen einer Position, in der das optische Schaltelement (1,15) in dem transmittierenden Schaltzustand ist, und einer Position, in der das optische Schaltelement in dem reflektierenden Schaltzustand ist, bewegbar ist,
daß im transmittierenden Schaltzustand sich der bewegbare Körper (10,16) im Strahlengang des einfallenden Lichts befindet und zumindest der im Strahlengang des einfallenden Lichts liegende Bereich eines Spaltes (12) zwischen der Grenzfläche (4) und der Oberfläche des bewegbaren Körpers vollständig mit der Flüssigkeit gefüllt ist, und in dem reflektierenden Schaltzustand zumindest der im Strahlengang des einfallenden Lichts liegende Bereich der Grenzfläche (4) frei von der Flüssigkeit ist, so daß das einfallende Licht an der Grenzfläche im wesentlichen reflektiert wird,
und mit mindestens einer Betätigungseinrichtung (24) zum Umschalten des Schaltelements zwischen dem transmittierenden und dem reflektierenden Schaltzustand durch Bewegen des bewegbaren Körpers (10,16).

31. Schaltanordnung nach Anspruch 30, wobei die Ausnehmungen (34) der Schaltelemente (1,15) nach Art einer NxM-Matrix in einem gemeinsamen Basiskörper angeordnet sind.

32. Schaltanordnung nach Anspruch 30, wobei die Schaltelemente als einzelne Schaltmodule realisiert und in nach Art einer NxM-Matrix angeordneten Ausnehmungen einer Matrixplatte angeordnet sind.

33. Schaltanordnung nach Anspruch 30, 31 oder 32, wobei der Basiskörper (30) bzw. die Matrixplatte N parallele Kanäle zur Aufnahme von N-Eingangslichtwellenleitern (35-38) und M parallele Kanäle zur Aufnahme von M Ausgangslichtwellenleiter (39-42) aufweist, wobei die Eingangskanäle im Winkel von 70° bis 110° zu den Ausgangskanälen und die Grenzflächen der Ausnehmungen der Schaltelemente in einem Winkel von 40° bis 50° zu den Eingangs- bzw. Ausgangskan älen angeordnet sind.

34. Schaltanordnung nach einem der Ansprüche 30 bis 33, wobei die Schaltanordnung zusätzlich N zweite optische Ausgänge aufweist, die auf der den N esten optischen Eingängen gegenüberliegenden Seite der Schaltanordnung angeordnet sind.

35. Schaltanordnung nach einem der Ansprüche 30 bis 34, wobei die Schaltanordung M zweite optische Eingänge aufweist, die auf der den M ersten optischen Ausgängen gegenüberliegenden Seite der Schaltanordnung angeordnet sind.

36. Schaltanordnung nach einem der Ansprüche 30 bis 35, wobei N Schaltelemente (1, 15) nach Art einer Diagonalen einer NxN Matrix angeordnet sind, wobei die Zahl N der optischen Eingänge gleich der Zahl M der optischen Ausgänge ist.

37. Schaltanordnung nach einem der Ansprüche 30 bis 36, wobei im Strahlengang zwischen den Eingangs- und Ausgangskanälen und den Ausnehmungen der Schaltelemente (54) Vertiefungen vorgesehen sind, in die optische Elemente (53), insbesondere Mikrolinsen oder GRIN-Linsen, eingesetzt sind.

38. Schaltanordnung nach einem der Ansprüche 30, 31 oder 33 bis 37, wobei der Basiskörper (30) aus einer Bodenplatte (31), einer strukturierten Platte (32) und einer Deckplatte (33) zusammengesetzt ist.

## Claims

1. An optical switching element for changing the direction of propagation of at least one beam of light with a base body (2), which is transparent at least along the path of the beam and has a recess (3) between an optically denser medium and an optically less dense medium to form at least one interface (4) which the incident beam of light (5) strikes, said recess containing a liquid (13) and a body (10, 16) which is movable in the recess (3),
whereby the base body (2) and the movable body (10, 16) consist at least in parts of the materials that are transparent in the wavelength range used, and the liquid is such that and the movable body is designed such that and is movable in the recess between a position in which the optical switching element is in the transmitting switch state and a position in which the optical switching element is in the reflecting switch state
so that in the transmitting switch state, the movable body (10, 16) is in the path of the beam of the incident light and at least the area of a gap (12) situated in the path of the beam of the incident light is filled completely with liquid between the interface (4) and the surface of the movable body,
whereby in the reflecting switch state at least the area of the interface (4) which is located in the path of the beam of the incident light is free of liquid, so that the incident light is essentially reflected at the interface, and
whereby at least one actuating device (24) is provided for switching the switching element of the movable body (10, 16) between the transmitting switch state and the reflecting switch state.

2. The optical switching element according to Claim 1, whereby the base body (2), the movable body (10, 16) and the liquid (13) have essentially the same refractive index.

3. The optical switching element according to Claims 1 or 2, whereby the movable body (10, 16) is provided with at least one body or one layer (16') made of a magnetic or magnetizable material, and the actuating device (24) preferably has at least one electromagnet (25) and/or permanent magnet arranged outside the recess.

4. The optical switching element according to Claims 1 or 2, whereby the movable body (10, 16) is connected to at least one actuating device, preferably piezoelectric or thermoelectric.

5. The optical switching element according to one of Claims 1 through 4, whereby the recess (20) is filled with liquid (26) to the extent that in the reflecting switch state, the area of the interface situated in the path of the beam of the incident light (23) is outside the liquid level, and in the transmitting switch state, the movable body is moved in the liquid so that the area of the gap situated in the path of the beam of the incident light is filled with liquid by displacement.

6. The optical switching element according to one of Claims 1 through 5, whereby a liquid film is formed between a part of the surface of the movable body (16) and a part of the wall of the recess (20), movable body (16) is movable in the recess such that in the transmitting switch state, the area of the gap situated in the path of the beam of the incident light (23) between the interface (19) and the surface of the movable body (16) is filled with the liquid film, and in the reflecting switch state, the area of the interface (19) situated in the path of the beam of the incident light (23) is free of the film of liquid.

7. The optical switching element according to one of Claims 1 through 6, whereby the recess (3) and the movable body (10, 16) have essentially a triangular cross section in the plane of the path of a beam of light.

8. The optical switching element according to one of Claims 1 through 6, whereby the recess (3) and the movable body (10, 16) have essentially a rectangular cross section in the plane of the path of a beam of light.

9. The optical switching element according to one of Claims 1 through 8, whereby the interface (4, 19) is arranged relative to the incident beam of light so that the incident light is essentially completely reflected at the interface in the reflecting switch state.

10. The optical switching element according to Claim 9, whereby the angle between the incident beam of light and the interface (4, 19) is 40° to 50°.

11. The optical switching element according to Claims 1 through 10, whereby the interface (4, 19) is shaped so that in the reflecting switch state, light is at least partially bundled by reflection at the interface (4, 19).

12. The optical switching element according to Claims 1 through 11, whereby the base body (2) has at least one additional recess to accommodate and hold optical fibers, especially individual fibers, bands of fibers or fiber plugs.

13. The optical switching element according to Claims 1 through 12, whereby the base body (2) has at least one additional recess to accommodate optical elements, especially micro-lenses or GRIN lenses.

14. The optical switching element according to Claims 1 through 13, whereby the base body (2) has at least one additional recess which is shaped and arranged in the path of the beam so that it essentially bundles the incident light.

15. The optical switching element according to one of Claims 1 through 14, whereby a surface of the recess is provided for optional reflection or transmission of beams of light.

16. The optical switching element according to one of Claims 1 through 14, whereby two surfaces (60, 61) of the recess (3) are provided for optional reflection or transmission of beams of light.

17. The optical switching element according to Claim 16, whereby the two reflecting surfaces (60, 61) are arranged essentially parallel to one another.

18. The optical switching element according to Claim 16, whereby the two reflecting surfaces (60, 61) are arranged at an angle of 70° to 110° to one another.

19. The optical switching element according to one of Claims 1 through 18, whereby at least two optical inputs are arranged at an angle of 70° to 110° to one another.

20. The optical switching element according to Claim 18 or 19, whereby the recess (3) and the movable body (10) have essentially the cross section of an equilateral triangle in the plane of the path of a beam of light.

21. The optical switching element according to one of Claims 18 through 20, whereby the base body (2) has two additional surfaces (62, 63) which are arranged essentially opposite the two reflecting surfaces (60, 61) of the recess (3), and these two surfaces of the base body form an angle of 70° to 110° and are arranged so that at least one beam of light is completely reflected on both surfaces (62, 63) in the transmitting switch state.

22. The optical switching element according to Claim 21, whereby the two additional surfaces (62, 63) are formed by at least one additional recess in the base body.

23. The optical switching element according to Claim 18 or 19, whereby the recess and the movable body (10) have essentially a rectangular cross section in the plane of the path of a beam of light,
and at least the area of the gap in the path of the beam between the two reflecting surfaces (60, 61) of the recess (3) and the adjacent surfaces of the movable body in the transmitting state is filled with liquid (13), while the third and fourth surfaces (64, 65) of the movable body which are opposite these two surfaces of the movable body are not covered with the liquid, so that in the transmitting switch state, at least one beam of light is completely reflected on both surfaces (64, 65) in the movable body.

24. The optical switching element according to one of Claims 1 through 23, whereby at least three surfaces of the recess (3) are provided for optional reflection or transmission of beams of light.

25. The optical switching element according to Claim 24, whereby the recess and the movable body have essentially a square cross section in the plane of the path of a beam of light.

26. The optical switching element according to one of Claims 1 through 25, whereby at least a portion of the incident beams of light is arranged relative to the surface (4) of the recess (3) by which it is reflected in the reflecting switch state, so that this portion of the incident beams of light is essentially in one plane with the corresponding reflected beams of light.

27. The optical switching element according to one of Claims 1 through 25, whereby at least a portion of the incident beams of light is arranged relative to the surface of the recess by which they are reflected in the reflecting switch state so that the plane of this portion of the incident beams of light forms an angle of 70° to 110° with the plane of the corresponding reflected beams of light.

28. The optical switching element according to one of Claims 1 through 27, whereby the movable body (10) has at least two areas with a larger cross section parallel to the plane of the path of a beam of light which are so close to at least one surface (60, 61) of the recess that a film of liquid remains between these areas and the corresponding surface of the recess, whereas no film of liquid is between the other areas having a smaller cross section of the movable body and the corresponding surface of the recess.

29. The optical switching element according to one of Claims 1 through 28, whereby the base body (2) and/or the movable body (10, 16) is made at least in part of a transparent polymer, a glass or a transparent material produced by a sol-gel process.

30. A switching arrangement within optical inputs (E1, E2) and M optical outputs (A1, A2) where N, M ≥ 1, having switching elements (1, 15) arranged in the manner of an NxM switching matrix, with N lines and M columns, whereby each optical switching element is used to change the direction of propagation of at least one beam of light (5) and
containing a base body (2) which is transparent at least along the path of the beam and has a recess (3) containing a liquid (13) and a movable body (10, 16) between an optically denser medium and an optically less dense medium to form at least one interface (4) which is struck by the incident beam of light (5), whereby the base body (2) and the movable body (10, 16) are made of materials which are transparent at least in portions in the wavelength range used, and the liquid is such that and the movable body is designed so that and is movable in the recess between a position in which the optical switching element (1, 15) is in the transmitting switch state and a position in which the optical switching element is in the reflecting switch state
so that the movable body (10, 16) is in the path of the incident beam of light in the transmitting switch state and at least the area of a gap (12) between the interface (4) and the surface of the movable body in the path of the beam of the incident light is filled completely with the liquid, and in the reflecting switch state at least the area of the interface (4) which is in the path of the beam of the incident light is free of liquid, so that the incident light is essentially reflected at the interface,
and with at least one actuating device (24) for switching the switching element between the transmitting switch state and the reflecting switch state by moving the movable body (10, 16).

31. The switching arrangement according to Claim 30, whereby the recesses (34) of the switching elements (1, 15) are arranged in the manner of an NxM matrix in a common base body.

32. The switching arrangement according to Claim 30, whereby the switching elements are implemented in the form of individual switching modules and are arranged in recesses in a matrix plate arranged in the manner of an NxM matrix.

33. The switching arrangement according to Claims 30, 31 or 32, whereby the base body (30) or the matrix plate has N parallel channels for accommodating N input optical fibers (35 - 38) and M parallel channels to accommodate M output optical fibers (39 - 42), whereby the input channels are arranged at an angle of 70° to 110° to the output channels, and the interfaces of the recesses of the switching elements are arranged at an angle of 40° to 50° to the input channels and/or the output channels.

34. The switching arrangement according to one of Claims 30 to 33, whereby the switching arrangement additionally has N second optical outputs which are arranged on the side of the switching arrangement opposite the N first optical inputs.

35. The switching arrangement according to one of Claims 30 to 34, whereby the switching arrangement has M second optical inputs which are arranged on the side of the switching arrangement opposite the M first optical outputs.

36. The switching arrangement according to one of Claims 30 to 35, whereby N switching elements (1, 15) are arranged in the manner of a diagonal in an NxN matrix, whereby the number N of the optical inputs is equal to the number M of the optical outputs.

37. The switching arrangement according to one of Claims 30 through 36, whereby depressions in which the optical elements (53), especially micro-lenses or GRIN lenses, are inserted are provided in the path of the beam between the input channels and output channels and the recesses of the switching elements (54).

38. The switching arrangement according to one of Claims 30, 31 or 33 through 37, whereby the base body (30) is composed of a base plate (31), a structured plate (32) and a cover plate (33).

## Revendications

1. Elément de commutation optique pour la modification du sens de diffusion d'au moins un rayon lumineux avec un corps de base (2) laissant passer la lumière au moins le long du parcours optique, ce corps de base présentant, pour former au moins une surface de contact (4) sur laquelle le rayon lumineux incident (5) arrive, entre une substance assez épaisse du point de vue optique et une substance plus mince du point de vue optique, un évidement (3) qui contient un liquide (13) et un corps (10, 16) mobile dans l'évidement (3),
le corps de base (2) et le corps mobile (10, 16) consistant, du moins en partie, en matières transparentes dans la zone de longueur d'ondes utilisée et le liquide étant apporté et le corps mobile étant conçu et pouvant se déplacer dans l'évidement entre une position dans laquelle l'élément de commutation optique est en état de commutation transmettrice et une position dans laquelle l'élément de commutation optique est en état de commutation réfléchissante, de manière à ce que
à l'état de commutation transmettrice, le corps mobile (10, 16) se trouve dans le parcours optique de la lumière incidente et qu'au moins la zone située dans le parcours optique de la lumière incidente d'un intervalle (12) entre la surface de contact (4) et la surface supérieure du corps mobile soit complètement remplie de liquide,
à l'état de commutation réfléchissante, au moins la zone située dans le parcours optique de la lumière incidente de la surface de contact (4) étant exempte de liquide, de manière à ce que la lumière incidente soit globalement reflétée sur la surface de contact, et
au moins un système d'actionnement (24) pour la permutation du corps mobile (10, 16) étant prévu entre l'état de commutation transmettrice et l'état de commutation réfléchissante.

2. Elément de commutation optique selon la revendication 1, le corps de base (2), le corps mobile (10, 16) et le liquide (13) présentant globalement le même indice de réfraction.

3. Elément de commutation optique selon les revendications 1 ou 2, le corps mobile (10, 16) étant pourvu d'au moins un corps ou une couche (16') en matière magnétique ou magnétisable et le système d'actionnement (24) présentant de préférence au moins un électro-aimant (25) disposé hors de l'évidement et/ou des aimants permanents.

4. Elément de commutation optique selon la revendication 1 ou 2, le corps mobile (10, 16) étant relié à au moins un système d'actionnement de préférence piézo-électrique ou thermo-électrique.

5. Elément de commutation optique selon une des revendications 1 à 4, l'évidement (20) étant rempli de liquide (26) de manière à ce que, à l'état de commutation réfléchissante, la zone située dans le parcours optique de la lumière incidente (23) de la surface de contact se trouve à l'extérieur du niveau du liquide et que, à l'état de commutation transmettrice, le corps mobile soit déplacé dans le liquide de manière à ce que la zone de l'intervalle située dans le parcours optique de la lumière incidente soit remplie de liquide par refoulement.

6. Elément de commutation optique selon une des revendications 1 à 5, un film liquide étant formé entre une partie de la surface supérieure du corps mobile (16) et une partie de la paroi de l'évidement (20) et le corps mobile (16) pouvant être déplacé dans l'évidement de manière à ce que, à l'état de commutation transmettrice, la zone de l'intervalle située dans le parcours optique de la lumière incidente (23) soit remplie par le film liquide entre la surface de contact (19) et la surface supérieure du corps mobile (16) et que, à l'état de commutation réfléchissante, la zone de la surface de contact (19) située dans le parcours optique de la lumière incidente (23) soit exempte de film liquide.

7. Elément de commutation optique selon une des revendications 1 à 6, l'évidement (3) et le corps mobile (10, 16) présentant globalement une section transversale en forme de triangle dans le plan du parcours optique d'un rayon lumineux.

8. Elément de commutation optique selon une des revendications 1 à 6, l'évidement (3) et le corps mobile (10, 16) présentant globalement une section transversale en forme de quadrilatère dans le plan du parcours optique d'un rayon lumineux.

9. Elément de commutation optique selon une des revendications 1 à 8, la surface de contact (4, 19) étant disposée par rapport au rayon lumineux incident de manière à ce que, à l'état de commutation réfléchissante, la lumière incidente soit globalement réfléchie en totalité sur la surface de contact.

10. Elément de commutation optique selon la revendication 9, l'angle entre le rayon lumineux incident et la surface de contact (4, 19) étant de 40° à 50°.

11. Elément de commutation optique selon les revendications 1 à 10, la surface de contact (4, 19) étant formée de manière à ce que, à l'état de commutation réfléchissante, la lumière soit fusionnée au moins partiellement par réflexion sur la surface de contact (4, 19).

12. Elément de commutation optique selon les revendications 1 à 11, le corps de base (2) présentant au moins un évidement supplémentaire destiné à recevoir et à maintenir des conducteurs d'ondes lumineuses, en particulier de fibres distinctes, bandelettes de fibres ou prises à fibres.

13. Elément de commutation optique selon les revendications 1 à 12, le corps de base (2) présentant au moins un évidement supplémentaire destiné à recevoir et à maintenir des éléments optiques, en particulier des micro-lentilles ou des lentilles GRIN.

14. Elément de commutation optique selon les revendications 1 à 13, le corps de base (2) présentant au moins un évidement supplémentaire, qui est formé et disposé dans le parcours optique de manière à ce qu'il fusionne globalement la lumière incidente.

15. Elément de commutation optique selon une des revendications 1 à 14, une surface de l'évidement étant prévue pour la réflexion ou la transmission au choix de rayons lumineux.

16. Elément de commutation optique selon une des revendications 1 à 14, deux surfaces (60, 61) de l'évidement (3) étant prévues pour la réflexion ou la transmission au choix de rayons lumineux.

17. Elément de commutation optique selon la revendication 16, les deux surfaces réfléchissantes (60, 61) étant globalement disposées en parallèle l'une par rapport à l'autre.

18. Elément de commutation optique selon la revendication 16, les deux surfaces réfléchissantes (60, 61) étant globalement disposées dans un angle de 70° à 110° l'une par rapport à l'autre.

19. Elément de commutation optique selon une des revendications 1 à 18, au moins deux entrées optiques étant disposées dans un angle de 70° à 110° l'une par rapport à l'autre.

20. Elément de commutation optique selon la revendication 18 ou 19, l'évidement (3) et le corps mobile (10) présentant globalement, dans le plan du parcours optique d'un rayon lumineux, une section transversale en forme de triangle isocèle.

21. Elément de commutation optique selon une des revendications 18 à 20, le corps de base (2) présentant deux surfaces supplémentaires (62, 63) qui sont disposées globalement en face des deux surfaces réfléchissantes (60, 61) de l'évidement (3), et ces deux surfaces du corps de base formant un angle de 70° à 110° et étant disposées de manière à ce que, à l'état de commutation transmettrice, au moins un rayon lumineux soit reflété en totalité sur les deux surfaces (62, 63).

22. Elément de commutation optique selon la revendication 21, les deux surfaces supplémentaires (62, 63) étant formées par au moins un évidement supplémentaire dans le corps de base.

23. Elément de commutation optique selon la revendication 18 ou 19, l'évidement et le corps mobile (10) présentant globalement une section transversale en forme de quadrilatère dans le plan du parcours optique d'un rayon lumineux,
et au moins la zone de l'intervalle située dans le parcours optique entre les deux surfaces réfléchissantes (60, 61) de l'évidement (3) et les surfaces voisines du corps mobile étant remplie de liquide (13) à l'état de commutation transmettrice, tandis que la troisième et la quatrième surface (64, 65) du corps mobile faisant face à ces deux surfaces du corps mobile n'est pas recouverte de liquide, de manière à ce que, à l'état de commutation transmettrice, au moins un rayon lumineux soit reflété en totalité sur les deux surfaces (64, 65) dans le corps mobile.

24. Elément de commutation optique selon une des revendications 1 à 23, au moins trois surfaces de l'évidement (3) étant prévues pour la réflexion ou la transmission au choix de rayons lumineux.

25. Elément de commutation optique selon la revendication 24, l'évidement et le corps mobile présentant globalement une section transversale en forme de carré dans le plan du parcours optique d'un rayon lumineux.

26. Elément de commutation optique selon une des revendications 1 à 25, au moins une partie des rayons lumineux incidents étant disposés, par rapport à la surface (4) de l'évidement (3), d'où ils sont reflétés à l'état de commutation réfléchissante, de manière à ce que cette partie des rayons lumineux incidents soit globalement dans un plan unique avec les rayons lumineux correspondants reflétés.

27. Elément de commutation optique selon une des revendications 1 à 25, au moins une partie des rayons lumineux incidents étant disposés, par rapport à la surface de l'évidement, d'où ils sont reflétés à l'état de commutation réfléchissante, de manière à ce que le plan de cette partie des rayons lumineux incidents forme un angle de 70° à 110° avec le plan des rayons lumineux correspondants reflétés.

28. Elément de commutation optique selon une des revendications 1 à 27, le corps mobile (10) présentant au moins deux zones de section transversale plus grande en parallèle au plan de parcours optique d'un rayon lumineux, qui jouxtent au moins une surface (60, 61) de l'évidement de manière à ce qu'entre ces zones et la surface correspondante de l'évidement, un film liquide subsiste, tandis qu'entre les autres zones de section transversale plus faible du corps mobile et la surface correspondante de l'évidement, il n'y a aucun film liquide.

29. Elément de commutation optique selon une des revendications 1 à 28, le corps de base (2) et/ou le corps mobile (10, 16) consistant, du moins en partie, en un polymère transparent, un verre ou une matière transparente fabriquée selon un procédé sol-gel.

30. Agencement de commutation avec N entrées optiques (E1, E2) et M sorties optiques (A1, A2), avec N, M ≥ 1, qui présente des éléments de commutation (1, 15) agencés à la manière d'une matrice de commutation NxM avec N lignes et M colonnes, chaque élément de commutation optique servant à modifier le sens de diffusion d'au moins un rayon lumineux (5),
et contient un corps de base (2), laissant passer la lumière du moins le long du rayon lumineux, qui présente, pour la formation d'au moins une surface de contact (4) sur laquelle le rayon lumineux incident (5) arrive, entre une substance assez épaisse au point de vue optique et une substance plus mince au point de vue optique, un évidement (3), qui contient un liquide (13) et un corps mobile (10, 16), le corps de base (2) et le corps mobile (10, 16) consistant, du moins en partie, en matières transparentes dans la zone de longueur d'ondes utilisée, et le liquide étant apporté et le corps mobile étant conçu et pouvant être déplacé dans l'évidement entre une position dans laquelle l'élément de commutation optique (1, 15) est en état de commutation transmettrice et une position dans laquelle l'élément de commutation optique est en état de commutation réfléchissante, de manière à ce que
à l'état de commutation transmettrice, le corps mobile (10, 16) se trouve dans le parcours optique de la lumière incidente et qu'au moins la zone située dans le parcours optique de la lumière incidente d'un intervalle (12) entre la surface de contact (4) et la surface supérieure du corps mobile soit complètement remplie de liquide et qu'à l'état de commutation réfléchissante, au moins la zone de la surface de contact (4) située dans le parcours optique de la lumière incidente soit exempte de liquide, de manière à ce que la lumière incidente soit globalement reflétée sur la surface de contact,
et avec au moins un système d'actionnement (24) pour la permutation de l'élément de commutation entre l'état de commutation transmettrice et de commutation réfléchissante par déplacement du corps mobile (10, 16).

31. Agencement de commutation selon la revendication 30, les évidements (34) des éléments de commutation (1, 15) étant agencés à la manière d'une matrice NxM dans un corps de base commun.

32. Agencement de commutation selon la revendication 30, les éléments de commutation étant réalisés sous forme de modules individuels de commutation et étant disposés dans des évidements agencés à la manière d'une matrice NxM d'une plaque matrice.

33. Agencement de commutation selon la revendication 30, 31 ou 32, le corps de base (30) ou la plaque matrice présentant N canaux parallèles destinés à recevoir N conducteurs d'ondes lumineuses d'entrée (35 - 38) et M canaux parallèles destinés à recevoir M conducteurs d'ondes lumineux de sortie (39 - 42), les canaux d'entrée étant disposés dans un angle de 70° à 110° par rapport aux canaux de sortie et les surfaces de contact des évidements des éléments de commutation dans un angle de 40° à 50° par rapport aux canaux d'entrée ou de sortie.

34. Agencement de commutation selon une des revendications 30 à 33, l'agencement de commutation présentant en supplément N secondes sorties optiques, qui sont disposées sur la face de l'agencement de commutation faisant face aux N premières entrées optiques.

35. Agencement de commutation selon une des revendications 30 à 34, l'agencement de commutation présentant en supplément M secondes entrées optiques, qui sont disposées sur la face de l'agencement de commutation faisant face aux M premières sorties optiques.

36. Agencement de commutation selon une des revendications 30 à 35, N éléments de commutation (1, 15) étant disposés à la manière d'une diagonale d'une matrice NxN, le nombre N d'entrées optiques étant égal au nombre M de sorties optiques.

37. Agencement de commutation selon une des revendications 30 à 36, des creux, dans lesquels sont insérés des éléments optiques (53), en particulier des micro-lentilles ou des lentilles GRIN, étant prévus entre les canaux d'entrée et de sortie et les évidements des éléments de commutation (54).

38. Agencement de commutation selon une des revendications 30, 31 ou 33 à 37, le corps de base (30) étant composé d'une plaque de fond (31), d'un plateau structuré (32) et d'une plaque de recouvrement (33).
